# EUROPEAN PATENT SPECIFICATION

(11) **EP 4 116 108 B1**
(45) Date of publication and mention of the grant of the patent: **16.10.2024**
(21) Application number: 21818578.3
(22) Date of filing: 13.05.2021
(51) Int. Cl.: B60C 1/00, C08L 7/00, C08L 9/06, C08K 3/36

(54) **TIRE**
REIFEN
PNEUMATIQUE

(30) Priority: 03.06.2020 JP 2020097022
(43) Date of publication of application: 11.01.2023
(73) Proprietor: Sumitomo Rubber Industries, Ltd., Kobe-shi, Hyogo 651-0072 (JP)
(72) Inventor: IKAI, Takuma, Kobe-shi, Hyogo 651-0072 (JP)
(74) Representative: Manitz Finsterwald Patent- und Rechtsanwaltspartnerschaft mbB
(86) International application number: PCT/JP2021/018250
(87) International publication number: WO 2021/246128

(56) References cited:
- EP-A1- 3 178 878
- WO-A1-2008/038462
- JP-A- 2015 013 924
- JP-A- 2016 074 808
- JP-A- 2017 145 342
- JP-A- 2018 083 884
- JP-A- 2019 073 579
- JP-A- H0 598 102
- US-A1- 2019 256 694

## Description

### TECHNICAL FIELD

The invention relates to a tire having an improved crack resistance.

### BACKGROUND ART

Generally, a rubber product including a tire deteriorates due to ozone or oxygen in the atmosphere, producing a crack on the surface thereof. Such a crack progresses due to static and dynamic stress applied to the rubber product, thereby causing rubber to be destructed.

Patent document 1 discloses providing a pneumatic tire in which steering stability, fuel efficiency, and processability are improved in a well-balanced manner using a predetermined copolymer produced by hydrogenating a copolymer of an aromatic vinyl compound and a conjugated diene compound.

### PRIOR ART DOCUMENT

### Patent Document

Patent Document 1: JP 2019-014796 A

EP3178878 discloses a rubber composition for tire components such as treads and sidewalls, which exhibits ozone resistance while maintaining fuel economy.

### SUMMARY OF THE INVENTION

### PROBLEM TO BE SOLVED BY THE INVENTION

An object of the invention is to provide a tire having an improved crack resistance.

### MEANS TO SOLVE THE PROBLEM

As a result of intensive studies, the inventor has found that the previously-described problem could be solved by using a rubber component comprising a diene-based rubber and a predetermined multi-component polymer for each of a tread part and at least one outermost surface member other than the tread part of a tire, and focusing on the aromatic vinyl unit content of each of individual rubber components and making the aromatic vinyl unit content of the rubber component constituting the tread part to be greater than that of the rubber component constituting the at least one outermost surface member other than the tread part, and has further carried out studies to complete the invention.

In other words, the invention relates to:
[1] A tire comprising a tread part, and at least one outermost surface member other than the tread part,
   wherein a rubber composition constituting the tread part comprises a rubber component comprising a diene-based rubber and a multi-component polymer, the multi-component polymer comprising an aromatic vinyl unit, a non-conjugated olefin unit, and a conjugated diene unit,
   wherein a rubber composition constituting the at least one outermost surface member other than the tread part comprises a rubber component comprising a diene-based rubber and a multi-component polymer, the multi-component polymer comprising an aromatic vinyl unit, a non-conjugated olefin unit, and a conjugated diene unit, and,
   wherein when, for each of individual rubber components constituting the rubber component of the tread part, a value obtained by multiplying a mass fraction in the rubber component and the aromatic vinyl unit content (% by mass) is calculated and these values are summed to calculate an aromatic vinyl unit content T_{Arm} (% by mass) in the rubber component of the tread part, and, on the other hand, for each of individual rubber components constituting the rubber component of the at least one outermost surface member other than the tread part, a value obtained by multiplying a mass fraction in the rubber component and the aromatic vinyl unit content (% by mass) is calculated and these values are summed to calculate an aromatic vinyl unit content OMM_{Arm} (% by mass) in the rubber component of the at least one outermost surface member other than the tread part, T_{Arm} is greater than OMM_{Arm}.
[2] The tire of [1] in the above, wherein a content of the multi-component polymer comprised in the rubber composition constituting the tread part is 5% by mass or more, preferably 10% by mass or more, more preferably 20% by mass or more, and further preferably 30% by mass or more in 100% by mass of the rubber component; and wherein a content of the multi-component polymer comprised in the rubber composition constituting the at least one outermost surface member other than the tread part is 2% by mass or more, preferably 8% by mass or more, more preferably 15% by mass or more, further preferably 20% by mass or more, and further preferably 30% by mass or more in 100% by mass of the rubber component.
[3] The tire of [1] or [2] in the above, wherein the T_{Arm} is 15% by mass or more, preferably 20% by mass or more, more preferably 25% by mass or more, further preferably 30% by mass or more, and further preferably 33% by mass or more.
[4] The tire of any one of [1] to [3] in the above, wherein the rubber composition constituting the tread comprises 40 parts by mass or more, preferably 50 parts by mass or more, more preferably 60 parts by mass or more, further preferably 70 parts by mass or more, and further preferably 80 parts by mass or more of a filler based on 100 parts by mass of the rubber component, and the filler comprises 50% by mass or more, more preferably 60% by mass or more, further preferably 70% by mass or more, further preferably 80% by mass or more, further preferably 83% by mass or more, and further preferably 90% by mass or more of silica, and
   wherein the rubber composition constituting the at least one outermost surface member other than the tread part comprises 10 parts by mass or more, preferably 20 parts by mass or more, more preferably 30 parts by mass or more, further preferably 40 parts by mass or more, and further preferably 50 parts by mass or more of a filler based on 100 parts by mass of the rubber component, and the filler comprises over 0% by mass of silica, or comprises preferably 50% by mass or more, more preferably 60% by mass or more, further preferably 70% by mass or more, further preferably 80% by mass or more, further preferably 83% by mass or more, and further preferably 90% by mass or more of silica.
[5] The tire of any one of [1] to [4] in the above, wherein the rubber composition constituting the tread part comprises 1 to 45 parts by mass, preferably 2 to 44 parts by mass, more preferably 3 to 43 parts by mass, further preferably 4 to 42 parts by mass, further preferably 5 to 41 parts by mass, further preferably 5 to 40 parts by mass, and further preferably 6 to 40 parts by mass of an aromatic ring-containing resin based on 100 parts by mass of the rubber component.
[6] The tire of any one of [1] to [5] in the above, wherein the diene-based rubber comprised in the rubber composition constituting the tread part comprises a natural rubber, and wherein the diene-based rubber comprised in the rubber composition constituting the at least one outermost surface member other than the tread part comprises a natural rubber.
[7] The tire of [6] in the above, wherein a content of the natural rubber of the tread part in 100% by mass of the rubber component is less than a content of the natural rubber of the at least one outermost surface member other than the tread part in 100% by mass of the rubber component.
[8] The tire of any one of [5] to [7] in the above, wherein the rubber composition constituting the at least one outermost surface member other than the tread part does not comprise the aromatic ring-containing resin, or parts by mass of the aromatic ring-containing resin based on 100 parts by mass of the rubber component, which aromatic ring-containing resin is comprised in the rubber composition constituting the at least one outermost surface member other than the tread part, is less than parts by mass of the aromatic ring-containing resin based on 100 parts by mass of the rubber component, which aromatic ring-containing resin is comprised in the rubber composition constituting the tread part.
[9] The tire of any one of [1] to [8] in the above, wherein the glass transition temperature of the rubber composition constituting the tread is higher than the glass transition temperature of the rubber composition constituting the at least one outermost surface member other than the tread part.
[10] The tire of any one of [1] to [9] in the above, wherein, in a case that the multi-component polymer comprised in the rubber composition constituting the tread part is a hydrogenated polymer of a polymer consisting of an aromatic vinyl unit and a conjugated diene unit, the hydrogenation ratio thereof is 30 mol% or more and less than 100 mol%, preferably 50 mol% or more and less than 100 mol%, more preferably 70 mol% or more and less than 100 mol%, and further preferably 90 mol% or more and less than 100 mol%, and, in a case that the multi-component polymer comprised in the rubber composition constituting the at least one outermost surface member other than the tread part is hydrogenated polymer of a polymer consisting of an aromatic vinyl unit and a conjugated diene unit, the hydrogenation ratio thereof is 30 mol% or more and less than 100 mol%, preferably 50 mol% or more and less than 100 mol%, more preferably 70 mol% or more and less than 100 mol%, and further preferably 90 mol% or more and less than 100 mol%.
[11] The tire of any one of [1] to [10] in the above, wherein the at least one outermost surface member other than the tread part is at least one selected from the group consisting of a wing, a sidewall, and a clinch apex.
[12] The tire of any one of [1] to [10] in the above, wherein the at least one outermost surface member other than the tread part is a sidewall.

### EFFECTS OF THE INVENTION

The invention makes it possible to provide a tire having an improved crack resistance.

### BRIEF DESCRIPTION OF THE DRAWINGS

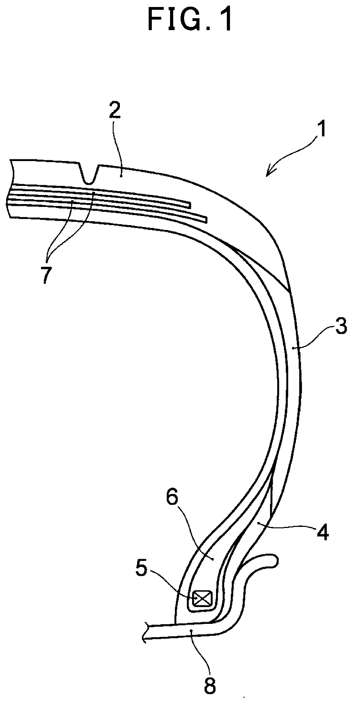

FIG. 1 is one example of a cross-sectional view of a tire comprising a tread part and a sidewall.
FIG. 2 is one example of a cross-sectional view of a tire comprising a tread part and outermost surface members (a wing, a sidewall, and a clinch apex).

### EMBODIMENT FOR CARRYING OUT THE INVENTION

A tire being one embodiment of the present disclosure is a tire comprising a tread part, and at least one outermost surface member other than the tread part, wherein a rubber composition constituting the tread part comprises a rubber component comprising a diene-based rubber and a multi-component polymer, the multi-component polymer comprising an aromatic vinyl unit, a non-conjugated olefin unit, and a conjugated diene unit, wherein a rubber composition constituting the at least one outermost surface member other than the tread part comprises a rubber component comprising a diene-based rubber and a multi-component polymer, the multi-component polymer comprising an aromatic vinyl unit, a non-conjugated olefin unit, and a conjugated diene unit, and, wherein when, for each of individual rubber components constituting the rubber component of the tread part, a value obtained by multiplying a mass fraction in the rubber component and the aromatic vinyl unit content (% by mass) is calculated and these values are summed to calculate an aromatic vinyl unit content T_{Arm} (% by mass) in the rubber component of the tread part, and, on the other hand, for each of individual rubber components constituting the rubber component of the at least one outermost surface member other than the tread part, a value obtained by multiplying a mass fraction in the rubber component and the aromatic vinyl unit content (% by mass) is calculated and these values are summed to calculate an aromatic vinyl unit content OMM_{Arm} (% by mass) in the rubber component of the at least one outermost surface member other than the tread part, T_{Arm} is greater than OMM_{Arm}.

Although it is not intended to be bound by theory, in the present disclosure, as the mechanism in which crack resistance can be improved, the following can be considered. In other words, first, the multi-component polymer being compounded in the diene-based rubber causes to form a sea-island structure, contributing to preventing progress of a crack that occurred in the diene-based rubber because of high crack progress resistance thereof. Second, the multi-component polymer being compounded not only in the tread part, but also in the at least one outermost surface member other than the tread part makes it possible to provide the surface of the tire, which surface is exposed to ozone or oxygen, with crack progress resistance. Third, making the aromatic vinyl unit content (T_{Arm}) in the rubber component constituting the tread part to be greater than the aromatic vinyl unit content (OMM_{Arm}) in the rubber component constituting the at least one outermost surface member other than the tread part causes a glass transition temperature (Tg) of the at least one outermost surface member other than the tread part to decrease, and causes the at least one outermost surface member other than the tread part to be softer than the tread part, making it possible for the at least one outermost surface member other than the tread part to function as a buffer material to absorb shock from a stepped portion, etc., and to prevent an occurrence of a crack between the tread part and the at least one outermost surface member other than the tread part. It is considered that the points such as those described above cooperate with one another to synergistically improve crack resistance.

The content of the multi-component polymer comprised in the rubber composition constituting the tread part is preferably 5% by mass or more in 100% by mass of the rubber component, and, on the other hand, the content of the multi-component polymer comprised in the rubber composition constituting the at least one outermost surface member other than the tread part is preferably 2% by mass or more in 100% by mass of the rubber component. It is considered that the above contributes in bringing out the effect of crack progress resistance by the multi-component polymer.

The T_{Arm} is preferably 15% by mass or more. It is considered that increasing the aromatic vinyl unit content of the tread part makes it easy for the at least one outermost surface member other than the tread part to act as a buffer material.

The rubber composition constituting the tread part preferably comprises 40 parts by mass or more of a filler based on 100 parts by mass of the rubber component, and, moreover, the filler preferably comprises 50% by mass or more of silica, and, on the other hand, the rubber composition constituting the at least one outermost surface member other than the tread part preferably comprises 10 parts by mass or more of a filler based on 100 parts by mass of the rubber component, and, moreover, the filler preferably comprises over 0% by mass of silica. It is considered that among fillers, silica is lower in the binding property of the rubber than carbon black and provides a flexible rubber composition, so that it serves to prevent an occurrence of a crack between a rubber component and a filler, between which stress concentrates when shock is applied to the rubber. It is considered that increasing the containing percentage of silica as such in both the tread part and the at least one outermost surface member other than the tread part makes it possible to reinforce also the interface between the tread and the at least one outermost surface member other than the tread part and also to contribute in preventing an occurrence of a crack between the members.

The rubber composition constituting the tread part preferably comprises 1 to 45 parts by mass of an aromatic ring-containing resin based on 100 parts by mass of the rubber component. It is considered that adding the aromatic ring-containing resin to the tread part having a high aromatic vinyl unit content increases the interaction between the aromatic vinyl unit and the aromatic ring of the aromatic ring-containing resin in the rubber component, contributing to increasing the reinforcing property.

The diene-based rubber comprised in the rubber composition constituting the tread part preferably comprises a natural rubber, and, on the other hand, the diene-based rubber comprised in the rubber composition constituting the at least one outermost surface member other than the tread part preferably comprises a natural rubber. This is because the above allows the tread part and the at least one outermost surface member other than the tread part to utilize the characteristic of the natural rubber being high in mechanical strength.

The content of the natural rubber of the tread part in 100% by mass of the rubber component is preferably less than the content of the natural rubber of the at least one outermost surface member other than the tread part in 100% by mass of the rubber component. It is considered that promoting a decrease in the content of the multi-component polymer of the at least one outermost surface member other than the tread part causes the at least one outermost surface member to be soft and making it easier for the at least one outermost surface member to function as a buffer material.

Preferably, the rubber composition constituting the at least one outermost surface member other than the tread part does not comprise the aromatic ring-containing resin, or parts by mass of the aromatic ring-containing resin based on 100 parts by mass of the rubber component, which aromatic ring-containing resin is comprised in the rubber composition constituting the at least one outermost surface member other than the tread part, is less than parts by mass of the aromatic ring-containing resin based on 100 parts by mass of the rubber component, which aromatic ring-containing resin is comprised in the rubber composition constituting the tread part. It is considered that increasing the content of the aromatic ring-containing resin relatively in the tread part promotes softening the at least one outermost surface member other than the tread part, making it easier for the at least one outermost surface member to function as a buffer material. The content of the aromatic ring-containing resin based on 100 parts by mass of the rubber component in the rubber composition constituting the at least one outermost surface member other than the tread part is, in a case that it is 5 to 40 parts by mass in the rubber composition constituting the tread part, for example, less than the content of the aromatic ring-containing resin in the rubber composition constituting the tread part, and preferably 0 to 10 parts by mass, more preferably 0 to 6 parts by mass, and further preferably 0 to 4 parts by mass, or the aromatic ring-containing resin does not have to be comprised therein at all.

The glass transition temperature (Tg) of the rubber composition constituting the tread part is preferably higher than the glass transition temperature of the rubber composition constituting the at least one outermost surface member other than the tread part. It is considered that the at least one outermost surface member other than the tread part gets softer than the tread part, making it easier for the at least one outermost surface member to function as a buffer material. Tg of the rubber composition constituting the tread part is preferably -60°C or higher, more preferably -40°C or higher, and further preferably -20°C or higher. On the other hand, the Tg is preferably 0°C or lower, more preferably -5°C or lower, and further preferably -10°C or lower. Moreover, Tg of the rubber composition constituting the at least one outermost surface member other than the tread part is preferably -70°C or higher, more preferably -55°C or higher, and further preferably -40°C or higher. On the other hand, the Tg is preferably -30°C or lower, more preferably -25°C or lower, and further preferably -20°C or lower. Besides, in the specification, the glass transition temperature (Tg) of the rubber composition refers to the tan δ peak temperature measured using the following method. In other words, for each of test piece samples (for example, 40 mm vertical x 7 mm horizontal) of the rubber composition, using a dynamic viscoelasticity evaluation apparatus (EPLEXOR Series, manufactured by GABO Qualimeter Testanlagen GmbH), the temperature distribution curve of tan δ was measured under conditions of a frequency of 10 Hz, an initial strain of 10%, an amplitude of ±0.5%, a dynamic strain of 1.0%, and a temperature increasing rate of 2°C/min, and the temperature (tan δ peak temperature) corresponding to the greatest tan δ value in the obtained temperature distribution curve was set to be Tg.

In a case that the multi-component polymer comprised in the rubber composition constituting the tread part is a hydrogenated polymer of a polymer consisting of an aromatic vinyl unit and a conjugated diene unit, the hydrogenation ratio thereof is preferably 30 mol% or more and less than 100 mol%, and, on the other hand, in a case that the multi-component polymer comprised in the rubber composition constituting the at least one outermost surface member other than the tread part is a hydrogenated polymer of a polymer consisting of an aromatic vinyl unit and a conjugated diene unit, the hydrogenation ratio thereof is preferably 30 mol% or more and less than 100 mol%. It is considered that the above makes it easier for crack progress resistance of the multi-component polymer to be exhibited.

Below, a tire being one embodiment of the present disclosure will be described. The tire is to comprise a tread part composed of a rubber composition, and at least one outermost surface member other than the tread part, which at least one outermost surface member other than the tread part is composed of a rubber composition. Below, unless otherwise particularly noted, explanations for the rubber composition can be applied to both the rubber composition constituting the tread part and the rubber composition constituting the at least one outermost surface member other than the tread part. Besides, upper and lower limit numerical values with respect to "or more (higher)", "or less (lower)", and "to" are numerical values that can be arbitrarily combined, and numerical values in examples can also be set to be the upper and lower limits. Moreover, a numerical range specified using the recitation "to" is to include the numerical values at both ends thereof unless otherwise particularly noted.

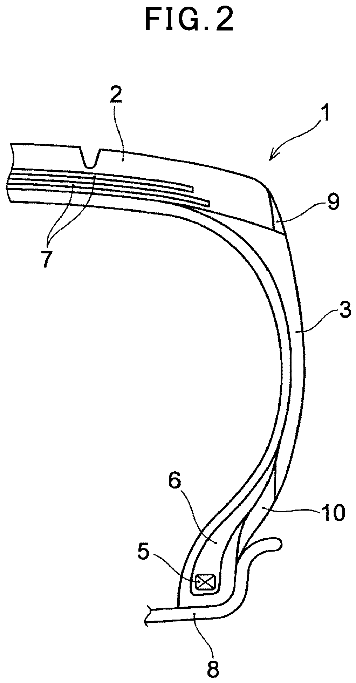

In the present disclosure, the at least one outermost surface member other than the tread part has no limit thereto as long as it is a member constituting the outermost surface of the tire, any one member constituting the outermost surface of the tire can apply to the at least one outermost surface member other than the tread part, and the at least one outermost surface member other than the tread part is not influenced by the name thereof. Examples of the at least one outermost surface member include a wing, a sidewall, and a clinch apex that are shown in FIG. 2, and the like, for example.

Therefore, the at least one outermost surface member other than the tread part is preferably at least one composed of the group consisting of the wing, the sidewall, and the clinch apex, and is, among them, preferably the sidewall.

In the present disclosure, in a case that a plurality of members apply to the at least one outermost surface member other than the tread part, for each of the members, the aromatic vinyl unit content, the multi-component polymer content, the filler content, the silica content in the filler, the aromatic ring-containing resin content, the natural rubber content, the glass transition temperature of the rubber composition, and, in a case of the multi-component polymer being a hydrogenated polymer of a polymer consisting of the aromatic vinyl unit and the conjugated diene unit, the hydrogenation ratio thereof, and the like are individually recognized.

### <Rubber component>

Both of the rubber composition constituting the tread part and the rubber composition constituting the at least one outermost surface member other than the tread part of the present disclosure comprise a rubber component comprising the diene-based rubber and the multi-component polymer.

### (Multi-component polymer)

A multi-component polymer refers to a copolymer comprising an aromatic vinyl unit, a non-conjugated olefin unit, and a conjugated diene unit, can comprise other monomer units, and is preferably a copolymer consisting of an aromatic vinyl unit, a non-conjugated olefin unit, and a conjugated diene unit. This copolymer can be obtained by copolymerizing a monomer component comprising the aromatic vinyl unit, the non-conjugated olefin unit, and the conjugated diene unit, and hydrogenating it as desired, and, in addition, can also be obtained by copolymerizing a monomer component comprising the aromatic vinyl unit and the conjugated diene unit, preferably a monomer component consisting of the aromatic vinyl unit and the conjugated diene unit, to obtain a copolymer and then hydrogenating the conjugated diene unit of the above-mentioned copolymer to create the non-conjugated olefin unit. The multi-component polymer is not particularly limited with respect to the arrangement of each unit as long as it is a copolymer having an aromatic vinyl unit, a non-conjugated olefin unit, and a conjugated diene unit, it can be a random copolymer that is obtained by random copolymerization or a block copolymer that is obtained by block copolymerization, and is preferably the random copolymer. One multi-component polymer may be used or two or more thereof may be used.

### <<Aromatic vinyl unit>>

An aromatic vinyl unit refers to a unit derived from an aromatic vinyl compound in a copolymer. Here, the aromatic vinyl compound refers to an aromatic compound at least substituted with a vinyl group, and what does not include the below-described conjugated diene compound. Examples of the aromatic vinyl compound include, for example, styrene, α-methylstyrene, 1-vinylnaphthalene, 3-vinyltoluene, ethylvinylbenzene, divinylbenzene, 4-cyclohexylstyrene, 2, 4, 6-trimethylstyrene, and the like. These may be used alone or two or more thereof may be used in combination, and, among these, from the viewpoint of practical aspects such as the ease of availability of monomer and for the reason that the effect of the present disclosure is more suitably obtained, styrene is particularly preferable.

### <<Non-conjugated olefin unit>>

A non-conjugated olefin unit refers to a unit derived from a non-conjugated olefin compound in a copolymer. Here, the non-conjugated olefin compound refers to an aliphatic unsaturated hydrocarbon being a non-conjugated compound having at least one carbon-carbon double bond. Examples of the non-conjugated olefin compound include, for example, α-olefins such as ethylene, propylene, 1-butene, 1-pentene, 1-hexene, 1-heptene, 1-octene; and hetero atom-substituted alkene compounds such as vinyl pivalate, 1-phenylthioethene, N-vinylpyrrolidone, and the like. Among them, ethylene, 1-butene, and the like are preferable. These may be used alone or two or more thereof may be used in combination, and, among these, from the viewpoint of practical aspects such as the ease of availability of monomer and for the reason that the effect of the present disclosure is more suitably obtained, ethylene is more preferable.

### <<Conjugated diene unit>>

A conjugated diene unit refers to a unit derived from a conjugated diene compound in a copolymer. Here, examples of the conjugated diene compound include, for example, 1,3-butadiene, isoprene, 1,3-pentadiene, 2,3-dimethylbutadiene, 2-phenyl-1,3-butadiene, 1,3-hexadiene, and the like. These may be used alone or two or more thereof may be used in combination, and, among these, from the viewpoint of practical aspects such as the ease of availability of monomer and for the reason that the effect of the present disclosure is more suitably obtained, 1,3-butadiene or isoprene is preferable, and 1 ,3-butadiene is more preferable.

### «Multi-component polymer»

Preferable specific examples of the multi-component polymer include, for example, a hydrogenated copolymer of a copolymer of styrene and 1,3-butadiene (styrene-butadiene copolymer (SBR)). Therefore, as the multi-component polymer, a hydrogenated styrene-butadiene copolymer (hydrogenated SBR) is preferable.

### <<Hydrogenation ratio>>

The hydrogenation ratio of the multi-component polymer (i.e., in a case that the multi-component polymer is a hydrogenated polymer of a polymer consisting of the aromatic vinyl unit and the conjugated diene unit, a proportion in which the double bonds on the above-mentioned conjugated diene unit are hydrogenated) is preferably 30 mol% or more from the viewpoint of the effect of the present disclosure. The hydrogenation ratio is more preferably 50 mol% or more, further preferably 70 mol% or more, and further preferably 90 mol% or more. The upper limit is not particularly limited, and it can be less than 100 mol%. The hydrogenation ratio may be adjusted by adjusting the hydrogen gas supply pressure, or reaction conditions such as the reaction temperature in the hydrogenation reaction as described in Manufacturing example 2 below. Besides, the hydrogenation ratio may be calculated from the rate of spectral decrease in an unsaturated bond part of the spectrum obtained by measuring ¹H-NMR.

### <<Modification>>

As desired, the multi-component polymer may also be treated with a modifier to be made as a modified body into which a functional group being interactive with silica is introduced. As the functional group as such, any one commonly used in this field may be suitably used, and examples thereof include, for example, an alkoxysilyl group (for example, a trimethoxysilyl group, a triethoxysilyl group), and the like. For example, treating the copolymer using chlorotriethoxysilane as a modifier after synthesis of the copolymer but before subjecting it to hydrogenation makes it possible to obtain a modified body into which the triethoxysilyl group is introduced at the active terminal of the copolymer. The modified multi-component polymer is preferably used for the rubber composition constituting the tread part.

### «Mw»

A weight-average molecular weight (Mw) of the multi-component polymer is preferably 50,000 or more, more preferably 100,000 or more, and further preferably 150,000 or more, from the viewpoint of the effect of the present disclosure. Moreover, the Mw of the multi-component polymer is preferably 2,000,000 or less, and, from the viewpoint of Mooney viscosity, more preferably 1,000,000 or less and further preferably 700,000 or less.

### «Mw/Mn»

The preferable range of the ratio, Mw with respect to the number-average molecular weight (Mn), or in other words, Mw/Mn, of the multi-component polymer is preferably 20.0 or less, more preferably 10.0 or less, and further preferably 5.0 or less, from the viewpoints of processability, and the like. On the other hand, there is not particular limit with respect to the lower limit of Mw/Mn, and there is no problem with 1.0 or more. Besides, in the specification, the weight-average molecular weight (Mw) and the number-average molecular weight (Mn) can be determined in terms of a standard polystyrene based on measurement values obtained by a gel permeation chromatography (GPC) (GPC-8000 Series, manufactured by Tosoh Corporation, Detector: differential refractometer, Column: TSKGEL SUPERMULTIPORE HZ-M, manufactured by Tosoh Corporation).

### «Tg»

From the viewpoint of abrasion resistance, the glass transition temperature (Tg) of the multi-component polymer is preferably -70°C or higher, more preferably -65°C or higher, and further preferably -60°C or higher. Moreover, from a similar viewpoint, the Tg of the multi-component polymer is preferably -10°C or lower, more preferably -15°C or lower, and further preferably -20°C or lower. The Tg of the multi-component polymer is measured by measuring with the use of a differential scanning calorimeter (Q200), manufactured by TA Instruments, Japan while increasing the temperature at a temperature increase rate of 10°C/min in accordance with JIS K 7121.

### <<Aromatic vinyl unit content of multi-component polymer>>

The aromatic vinyl unit content of the multi-component polymer is, from the viewpoint of the effect of the present disclosure, preferably 5% by mass or more, more preferably 20% by mass or more, and further preferably 25% by mass or more. Moreover, the aromatic vinyl unit content of the multi-component polymer is preferably 50% by mass or less, more preferably 45% by mass or less, and further preferably 40% by mass or less. Besides, the aromatic vinyl unit content of the multi-component polymer is measured by ¹H-NMR measurement.

### <<Content of multi-component polymer>>

From the viewpoint of the effect of the present disclosure, in the rubber composition constituting the tread part, the content of the multi-component polymer is, in 100% by mass of the rubber component, preferably 5% by mass or more, more preferably 10% by mass or more, further preferably 20% by mass or more, and further preferably 30% by mass or more. Moreover, the content is preferably 100% by mass or less, more preferably 70% by mass or less, further preferably 50% by mass or less, and further preferably 40% by mass or less. Moreover, from the viewpoint of the effect of the present disclosure, in the rubber composition constituting the at least one outermost surface member other than the tread part, the content of the multi-component polymer is, in 100% by mass of the rubber component, preferably 2% by mass or more, more preferably 8% by mass or more, further preferably 15% by mass or more, further preferably 20% by mass or more, and further preferably 30% by mass or more. Moreover, the content is preferably 45% by mass or less, more preferably 40% by mass or less, and further preferably 35% by mass or less.

The multi-component polymer content of the rubber composition constituting the tread part in 100% by mass of the rubber component is preferably the same as or greater than the multi-component polymer content of the rubber composition constituting the at least one outermost surface member other than the tread part in 100% by mass of the rubber component. For example, in a case that the multi-component polymer content (% by mass) of the rubber composition constituting the tread part is within the above-described range, the multi-component polymer content (% by mass) of the rubber composition constituting the at least one outermost surface member other than the tread part is the same as, or preferably lower by 2% by mass and more than and more preferably lower by 5% by mass or more than the multi-component polymer content (% by mass) of the rubber composition constituting the tread part.

### <<Confirmation of multi-component polymer>>

Besides, the confirmation that the multi-component polymer comprises the conjugated diene unit, the non-conjugated olefin unit, and the aromatic vinyl unit can be carried out by using methods of a gel permeation chromatography (GPC), ¹H-NMR, ¹³C-NMR, and the like. Specifically, based on the gel permeation chromatography-refractive index curve (GPC-RI curve) and the gel permeation chromatography-ultraviolet absorption curve (GPC-UV curve), UV absorption by an aromatic ring such as a benzene ring, and the like in the copolymer can be confirmed to confirm the presence of the skeleton derived from the aromatic vinyl compound. Moreover, the presence of units derived from each of the monomer components can be confirmed based on the ¹H-NMR spectrum or the ¹³C-NMR spectrum.

Moreover, of all the conjugated diene units in the multi-component polymer, the proportion of conjugated diene units present in a predetermined arrangement can be confirmed using a method disclosed in WO 2018/092733 A, for example, based on the ¹³C-NMR spectrum.

### <<Manufacturing method of multi-component polymer>>

The multi-component polymer can be synthesized, for example, by polymerizing a monomer component comprising the aromatic vinyl unit, the non-conjugated olefin unit and the conjugated diene unit and then subjecting a copolymer obtained to hydrogenation, if necessary. In addition, it can also be synthesized by copolymerizing a monomer component comprising the aromatic vinyl unit and the conjugated diene unit to obtain a copolymer and then hydrogenating the conjugated diene unit of the above-obtained copolymer to create the non-conjugated olefin unit. The synthesizing as such can be carried out by a normal method, and is disclosed in JP 2018-083884 A, WO 2018/092733 A, etc., for example. The same holds for the modified body of the multi-component polymer.

### (Diene-based rubber)

As the diene-based rubber, any one of rubber components other than the above-described multi-component polymer, which any one thereof is commonly used in the tire industry, can be suitably used. Specifically, examples thereof include, for example, isoprene-based rubbers, a styrene-butadiene rubber (SBR), a butadiene rubber (BR), a styrene-isoprene-butadiene copolymer rubber (SIBR), a styrene-isobutylene-styrene block copolymer (SIBS), a chloroprene rubber (CR), an acrylonitrile-butadiene rubber (NBR), a polynorbornene rubber, and the like. These diene-based rubber components may be used alone or two or more thereof may be used in combination.

The diene-based rubber preferably comprises at least one selected from the group consisting of an isoprene-based rubber, SBR, and BR, and may be a rubber component comprising the isoprene-based rubber, the SBR, and the BR. Moreover, the diene-based rubber may be a rubber component composed of only the isoprene-based rubber and the SBR, and may be a rubber component composed of only the isoprene-based rubber, the SBR, and the BR. Preferably, the diene-based rubber of the rubber composition constituting the tread part comprises the SBR and the BR, or it consists of the SBR and the BR. Preferably, the diene-based rubber of the rubber composition constituting the at least one outermost surface member other than the tread part comprises the isoprene-based rubber and the BR, or it consists of the isoprene-based rubber and the BR.

### (Isoprene-based rubbers)

As the isoprene-based rubbers, those common in the tire industry such as an isoprene rubber (IR), a natural rubber, and the like can be used, for example. Among them, in the natural rubber, in addition to a non-modified natural rubber (NR), an epoxidized natural rubber (ENR), a hydrogenated natural rubber (HNR), a deproteinized natural rubber (DPNR), an ultra pure natural rubber, a modified natural rubber including a grafted natural rubber, etc., and the like are also included. Among them, the natural rubber is preferable, and, for example, the NR may be suitably used. These isoprene-based rubbers may be used alone or two or more thereof may be used in combination.

The NR is not particularly limited, and, as the NR, those common in the tire industry such as, for example, SIR20, RSS#3, TSR20, and the like can be used.

From the viewpoint of a good riding comfort, in the rubber composition constituting the tread part, a content of the isoprene-based rubber in the rubber component is preferably 40% by mass or less, more preferably 20% by mass or less, and further preferably 10% by mass or less, or no isoprene-based rubber is preferably comprised therein. Note that the content may be 1 % by mass or more, 2% by mass or more, or 5% by mass or more from the viewpoints of processability and durability. Moreover, in the rubber composition constituting the at least one outermost surface member other than the tread part, a content of the isoprene-based rubber in the rubber component is preferably 10% by mass or more, more preferably 20% by mass or more, and further preferably 30% by mass or more, from the viewpoints of processability and durability. On the other hand, the content is preferably 70% by mass or less, more preferably 60% by mass or less, and further preferably 50% by mass or less, from the viewpoint of a good riding comfort.

The isoprene-based rubber content of the rubber composition constituting the tread part in 100% by mass of the rubber component is preferably less than the isoprene-based rubber content of the rubber composition constituting the at least one outermost surface member other than the tread part in 100% by mass of the rubber component. For example, in a case that the isoprene-based rubber content (% by mass) of the rubber composition constituting the at least one outermost surface member other than the tread part is within the above-described range, the isoprene-based rubber content (% by mass) of the rubber composition constituting the tread part is lower than the isoprene-based rubber content (% by mass) of the rubber composition constituting the at least one outermost surface member other than the tread part preferably by 10% by mass or more, more preferably by 20% by mass or more, and further preferably by 30% by mass or more, or the rubber composition constituting the tread part does not have to comprise the isoprene-based rubber at all.

### (SBR)

The SBR is not particularly limited, and examples thereof include a solution-polymerized SBR (S-SBR), an emulsion-polymerized SBR (E-SBR), modified SBRs thereof (a modified S-SBR, a modified E-SBR), and the like. Examples of the modified SBR include an SBR modified at its terminal and/or main chain, a modified SBR coupled with tin, a silicon compound, etc. (a modified SBR of condensate or having a branched structure, etc.), and the like. Among them, an S-SBR and a modified S-SBR are preferable from the viewpoint that fuel efficiency and abrasion resistance can be improved well. These SBRs may be used alone or two or more thereof may be used in combination.

A styrene content of the SBR is preferably 15% by mass or more and more preferably 20% by mass or more, from the viewpoints of securing damping in the tread part and wet grip performance. Moreover, it is preferably 60% by mass or less and more preferably 50% by mass or less, from the viewpoints of temperature dependence of grip performance and abrasion resistance. Besides, in the specification, the styrene content of the SBR is calculated by ¹H-NMR measurement.

A vinyl bond amount of the SBR is preferably 10 mol% or more, from the viewpoints of ensuring reactivity with silica, rubber strength, and abrasion resistance. Moreover, the vinyl bond amount of the SBR is preferably 70 mol% or less, from the viewpoints of preventing temperature dependence from increasing, wet grip performance, elongation at break, and abrasion resistance. Besides, in the specification, the vinyl bond amount (1,2-bond butadiene unit amount) of the SBR is measured by infrared absorption spectrometry.

From the viewpoint of abrasion resistance, the weight-average molecular weight (Mw) of the SBR is preferably 150,000 or more, more preferably 200,000 or more, and further preferably 250,000. Moreover, from the viewpoints of cross-linking uniformity and the like, the Mw is preferably 2,500,000 or less and more preferably 2,000,000 or less. Besides, the Mw can be determined in terms of a standard polystyrene based on measurement values by a gel permeation chromatography (GPC) (GPC-8000 Series, manufactured by Tosoh Corporation, Detector: differential refractometer, Column: TSKGEL SUPERMULTIPORE HZ-M, manufactured by Tosoh Corporation).

As the SBR, an oil-extended SBR can be used, or a non-oil-extended SBR can be used. When the oil-extended SBR is used, an oil-extended amount of the SBR, that is, a content of an oil-extended oil comprised in the SBR, is preferably 10 to 50 parts by mass based on 100 parts by mass of a rubber solid content of the SBR.

As the SBRs, for example, SBRs manufactured by and/or commercially available from Sumitomo Chemical Co., Ltd., JSR Corporation, Ube Industries, Ltd., Asahi Kasei Corporation, Zeon Corporation, ZS Elastomer Co., Ltd., etc. can be used.

A content of the SBR in the rubber component when the rubber composition constituting the tread part comprises the SBR is, in the rubber composition constituting the tread part, preferably 10% by mass or more, more preferably 15% by mass or more, further preferably 20% by mass or more, further preferably 25% by mass or more, further preferably 30% by mass or more, and further preferably 35% by mass or more, from the viewpoints of securing damping and wet grip performance. On the other hand, from the viewpoint of durability improvement caused by suppression of heat dissipation, the content is preferably 85% by mass or less, more preferably 80% by mass or less, further preferably 75% by mass or less, and further preferably 70% by mass or less. Moreover, from the viewpoint of durability improvement caused by suppression of heat dissipation, a content of the SBR in the rubber component when the rubber composition constituting the at least one outermost surface member other than the tread part comprises the SBR is, preferably 40% by mass or less, more preferably 30% by mass or less, further preferably 20% by mass or more, and further preferably 10% by mass or more, or it is preferable that the at least one outermost surface member other than the tread part preferably does not comprise the SBR. Note that the content may be 1% by mass or more, 2% by mass or more, or 5% by mass or more, from the viewpoints of securing damping and wet grip performance.

The SBR content of the rubber composition constituting the tread part in 100% by mass of the rubber component is preferably greater than the SBR content of the rubber composition constituting the at least one outermost surface member other than the tread part in 100% by mass of the rubber component. For example, the SBR content (% by mass) of the rubber composition constituting the at least one outermost surface member other than the tread part is lower than the SBR content (% by mass) of the rubber composition constituting the tread part preferably by 10% by mass or more, more preferably by 20% by mass or more, and further preferably by 30% by mass or more, or the rubber composition constituting the at least one outermost surface member other than the tread part does not have to comprise the SBR at all.

### (BR)

The BR is not particularly limited, and those commonly used in the tire industry can be used, such as, for example, a BR having a cis content (cis-1,4 bond content) of less than 50% (a low cis BR), a BR having a cis content of 90% or more (a high cis BR), a rare earth-based butadiene rubber synthesized using a rare earth element-based catalyst (a rare earth-based BR), a BR containing a syndiotactic polybutadiene crystal (an SPB-containing BR), a modified BR (a high cis modified BR, a low cis modified BR), and the like. These BRs may be used alone or two or more thereof may be used in combination.

As the rare earth-based BRs, those commonly used in the tire industry can be used. As rare earth element-based catalysts for use in synthesis (polymerization) of the rare earth-based BR, those which are known can be used, and examples thereof include, for example, a lanthanum series rare earth element compound, an organoaluminum compound, aluminoxane, a halogen-containing compound and, as needed, a catalyst comprising a Lewis base. Among them, from the viewpoint that the BR having a high cis content and a low vinyl content is obtained, the rare earth element-based catalyst is preferably a neodymium (Nd)-based catalyst using a neodymium-containing compound as the lanthanum series rare earth element compound.

Examples of the SPB-containing BR include those in which a 1,2-syndiotactic polybutadiene crystal is chemically bonded with the BR and dispersed, but not those in which the crystal is simply dispersed in the BR.

Examples of the modified BRs include those obtained by polymerizing 1,3-butadiene with a lithium initiator and then adding a tin compound and in which a modified BR molecule is bonded by a tin-carbon bond at its terminal (a tin-modified BR), a butadiene rubber having an alkoxysilane condensate compound at the active terminal of the butadiene rubber (a modified butadiene rubber for silica), and the like.

A weight-average molecular weight (Mw) of the BR is preferably 300,000 or more, more preferably 350,000 or more, and further preferably 400,000 or more, from the viewpoint of abrasion resistance. Moreover, it is preferably 2,000,000 or less, and more preferably 1,000,000 or less, from the viewpoints of cross-linking uniformity and the like. Besides, the Mw can be determined in terms of a standard polystyrene based on measurement values by a gel permeation chromatography (GPC) (GPC-8000 Series, manufactured by Tosoh Corporation, Detector: differential refractometer, Column: TSKGEL SUPERMULTIPORE HZ-M, manufactured by Tosoh Corporation).

As the BRs, for example, those commercially available from Ube Industries, Sumitomo Chemical Co., Ltd., JSR Corporation, Ltd., LANXESS, etc. can be used.

A content of the BR in the rubber component when the rubber composition constituting the tread part comprises the BR is, preferably 5% by mass or more, more preferably 10% by mass or more, and further preferably 20% by mass or more, from the viewpoint of abrasion resistance. Moreover, it is preferably 60% by mass or less, more preferably 50% by mass or less, and further preferably 40% by mass or less, from the viewpoint of wet grip performance. Furthermore, a content of the BR in the rubber component when the rubber composition constituting the at least one outermost surface member other than tread part comprises the BR is, preferably 2% by mass or more, more preferably 8% by mass or more, and further preferably 15% by mass or more, from the viewpoint of abrasion resistance. Moreover, from the viewpoint of riding comfort, it is preferably 55% by mass or less, more preferably 45% by mass or less, and further preferably 35% by mass or less.

The BR content of the rubber composition constituting the tread part in 100% by mass of the rubber component is preferably the same as or greater than the BR content of the rubber composition constituting the at least one outermost surface member other than the tread part in 100% by mass of the rubber component. For example, in a case that the BR content (% by mass) of the rubber composition constituting the tread part is within the above-described range, the BR content (% by mass) of the rubber composition constituting the at least one outermost surface member other than the tread part is the same as the BR content (% by mass) of the rubber composition constituting the tread part or preferably lower by 3% by mass or more, more preferably lower by 5% by mass or more, further preferably by 10% by mass or more than the BR content (% by mass) of the rubber composition constituting the tread part.

### (Other rubber components)

As the rubber component, rubber components other than those described above may be comprised within a range not impairing the effect of the present disclosure, and examples of such rubber components can include non-diene-based rubbers such as, for example, a hydrogenated nitrile rubber (HNBR), a butyl rubber (IIR), an ethylene propylene rubber, a silicone rubber, a polyethylene chloride rubber, a fluororubber (FKM), an acrylic rubber (ACM), a hydrin rubber, and the like.

### (Aromatic vinyl unit content of rubber component)

For each of individual rubber components constituting the rubber component of the tread part, a value obtained by multiplying a mass fraction in the rubber component and the aromatic vinyl unit content (% by mass) is calculated and a value in which these values are summed is defined as an aromatic vinyl unit content T_{Arm} (% by mass) in the rubber component of the tread part. Similarly, for each of individual rubber components constituting the rubber component of the at least one outermost surface member other than the tread part, a value obtained by multiplying a mass fraction in the rubber component and the aromatic vinyl unit content (% by mass) is calculated and a value in which these values are summed is defined as an aromatic vinyl unit content OMM_{Arm} (% by mass) in the rubber component of the at least one outermost surface member other than the tread part. In the present disclosure, T_{Arm} is greater than OMM_{Arm}. Here, in a case that the at least one outermost surface member other than the tread part is in a plurality, such as a sidewall, a wing, and a clinch apex, the OMM_{Arm} (% by mass) is calculated for each of the members.

For example, in a case that the at least one outermost surface member other than the tread part is a sidewall, for each of individual rubber components constituting the rubber component of the sidewall, a value obtained by multiplying a mass fraction in the rubber component and the aromatic vinyl unit content (% by mass) is calculated and a value in which these values are summed is defined as an aromatic vinyl unit content SW_{Arm} (% by mass) in the rubber component of the sidewall.

In a case that the at least one outermost surface member other than the tread part is a wing, for each of individual rubber components constituting the rubber component of the wing, a value obtained by multiplying a mass fraction in the rubber component and the aromatic vinyl unit content (% by mass) is calculated and a value in which these values are summed is defined as an aromatic vinyl unit content WG_{Arm} (% by mass) in the rubber component of the wing.

In a case that the at least one outermost surface member other than the tread part is a clinch apex, for each of individual rubber components constituting the rubber component of the clinch apex, a value obtained by multiplying a mass fraction in the rubber component and the aromatic vinyl unit content (% by mass) is calculated and a value in which these values are summed is defined as an aromatic vinyl unit content CL_{Arm} (% by mass) in the rubber component of the clinch apex.

From the viewpoint of the effect of the present disclosure, the T_{Arm} is preferably 15% by mass or more, preferably 20% by mass or more, preferably 25% by mass or more, preferably 30% by mass or more, and preferably 33% by mass or more.

On the other hand, OMM_{Arm} is less than T_{Arm}. In a case that T_{Arm} takes the above value, from the viewpoint of the effect of the present disclosure, OMM_{Arm} is less than the T_{Arm} preferably by 5% by mass or more, more preferably by 10% by mass or more, further preferably by 15% by mass or more, further preferably by 20% by mass or more, and further preferably by 23% by mass or more.

Moreover, SW_{Arm} is less than T_{Arm}. In a case that T_{Arm} takes the above value, from the viewpoint of the effect of the present disclosure, SW_{Arm} is less than the T_{Arm} preferably by 5% by mass or more, more preferably by 10% by mass or more, further preferably by 15% by mass or more, further preferably by 20% by mass or more, and further preferably by 23% by mass or more.

Moreover, WG_{Arm} is less than T_{Arm}. In a case that T_{Arm} takes the above value, from the viewpoint of the effect of the present disclosure, WG_{Arm} is less than the T_{Arm} preferably by 5% by mass or more, more preferably by 10% mass or more, further preferably by 15% by mass or more, further preferably by 20% by mass or more, and further preferably by 23% by mass or more.

Moreover, CL_{Arm} is less than T_{Arm}. In a case that T_{Arm} takes the above value, from the viewpoint of the effect of the present disclosure, CL_{Arm} is less than the T_{Arm} preferably by 5% mass or more, more preferably by 10% by mass or more, further preferably by 15% by mass or more, further preferably by 20% by mass or more, and further preferably by 23% by mass or more.

Besides, while there is no particular upper limit specified for any of T_{Arm}, and OMM_{Arm}, SW_{Arm}, WG_{Arm} and CL_{Arm} from the viewpoint of the effect of the present disclosure, each one thereof corresponds to a weighted average value of the aromatic vinyl unit content comprised by each of the rubber components constituting each of the tread part, and the sidewall, wing, clinch apex and the like being the outermost surface members other than the tread part, there is naturally an upper limit depending on the type and amount of the rubber component selected. Such an upper limit is, with respect to T_{Arm}, for example, approximately 50% by mass, or approximately 45% by mass, or approximately 40% by mass.

The value of the aromatic vinyl unit content of the rubber component corresponds to the weighted average value of the aromatic vinyl unit content of each of the rubber components comprised in the rubber component, so that, for example, it can be increased by using more rubber component having a large value of the aromatic vinyl unit content, while, conversely, it can be decreased by using more rubber component having a small value of the aromatic vinyl unit content.

### <Filler>

The filler preferably comprises carbon black and silica. Moreover, the filler may be composed of only carbon black and silica.

### (Carbon black)

Carbon black is not particularly limited, and those common in the tire industry can be used, such as GPF, FEF, HAF, ISAF, SAF, and the like, or specifically, N110, N115, N120, N125, N134, N135, N219, N220, N231, N234, N293, N299, N326, N330, N339, N343, N347, N351, N356, N358, N375, N539, N550, N582, N630, N642, N650, N660, N683, N754, N762, N765, N772, N774, N787, N907, N908, N990, N991, and the like can be suitably used, and, besides these, an in-house synthetic product and the like can also be suitably used. These carbon blacks may be used alone or two or more thereof may be used in combination.

A nitrogen adsorption specific surface area (N₂SA) of carbon black for use in the rubber composition constituting the tread part is preferably 100 m²/g or more, more preferably 110 m²/g or more, and further preferably 120 m²/g or more from the viewpoints of weather resistance and reinforcing property. Moreover, from the viewpoints of dispersibility, fuel efficiency, fracture properties, and durability, the N₂SA is preferably 250 m²/g or less, more preferably 200 m²/g or less, and further preferably 180 m²/g or less. On the other hand, a N₂SA in case of the rubber composition constituting the at least one outermost surface member other than the tread part is preferably 50 m²/g or more, more preferably 60 m²/g or more, and further preferably 70 m²/g or more from the viewpoints of weather resistance and reinforcing property. Moreover, from the viewpoints of dispersibility, fuel efficiency, fracture properties, and durability, the N₂SA is preferably 150 m²/g or less, more preferably 120 m²/g or less, and further preferably 100 m²/g or less. Besides, the N₂SA of carbon black in the specification is a value measured according to method A of Japanese Industrial Standard JIS K 6217-2 "Carbon black for rubber-Fundamental characteristics-Part 2: Determination of specific surface area-Nitrogen adsorption methods-Single-point procedures".

When the rubber composition constituting the tread part comprises the carbon black, the content thereof based on 100 parts by mass of the rubber component is, in the rubber composition constituting the tread part, preferably 1 parts by mass or more, more preferably 3 parts by mass or more, and further preferably 5 parts by mass or more, from the viewpoints of weather resistance and reinforcing property. On the other hand, the content is preferably 60 parts by mass or less, more preferably 50 parts by mass or less, and further preferably 40 parts by mass or less, from the viewpoint of durability improvement caused by suppression of heat dissipation. Moreover, when the rubber composition constituting the at least one outermost surface member other than the tread part comprises the carbon black, the content thereof based on 100 parts by mass of the rubber component is, in the rubber composition constituting the at least one outermost surface member other than the tread part, preferably 5 parts by mass or more, more preferably 10 parts by mass or more, and further preferably 15 parts by mass or more, from the viewpoints of weather resistance and reinforcing property. On the other hand, the content is preferably 150 parts by mass or less, more preferably 100 parts by mass or less, and further preferably 80 parts by mass or less, from the viewpoint of durability improvement caused by suppression of heat dissipation.

### (Silica)

Silica is not particularly limited, and for example, those common in the tire industry can be used, such as silica prepared by a dry process (anhydrous silica), silica prepared by a wet process (hydrous silica), and the like, for example. Among them, hydrous silica prepared by a wet process is preferable because it has many silanol groups. These silicas may be used alone or two or more thereof may be used in combination.

A nitrogen adsorption specific surface area (N₂SA) of silica is preferably 100 m²/g or more, more preferably 120 m²/g or more, further preferably 150 m²/g or more, and further preferably 170 m²/g or more, from the viewpoints of reinforcing property and securing damping. Moreover, it is preferably 350 m²/g or less, more preferably 300 m²/g or less, and further preferably 250 m²/g or less, from the viewpoints of heat generation and processability. Besides, the N₂SA of silica in the specification is a value measured by the BET method according to ASTM D3037-93.

When the rubber composition constituting the tread part comprises silica, a content of silica based on 100 parts by mass of the rubber component is, in the rubber composition constituting the tread part comprises silica, preferably 20 parts by mass or more, more preferably 30 parts by mass or more, further preferably 40 parts by mass or more, further preferably 50 parts by mass or more, and further preferably 60 parts by mass or more, from the viewpoints of securing damping and wet grip performance. On the other hand, the content is preferably 150 parts by mass or less, more preferably 120 parts by mass or less, and further preferably 100 parts by mass or less, from the viewpoint of reducing the specific gravity of the rubber composition and realizing a light weight and from the viewpoints of durability improvement caused by suppression of heat dissipation and securing of riding comfort performance caused by softness of rubber. Moreover, from the viewpoint of securing damping, when the rubber composition constituting the at least one outermost surface member other than the tread part comprises silica, a content of silica based on 100 parts by mass of the rubber component is, in the rubber composition constituting the at least one outermost surface member other than the tread part, 5 parts by mass or more, 10 parts by mass or more, or 15 parts by mass or more, or no silica may be comprised in the rubber composition constituting the at least one outermost surface member. On the other hand, the content is preferably 120 parts by mass or less, more preferably 100 parts by mass or less, and further preferably 80 parts by mass or less, from the viewpoint of reducing the specific gravity of the rubber composition and realizing a light weight and from the viewpoints of durability improvement caused by suppression of heat dissipation and securing of riding comfort performance caused by softness of rubber.

The silica content of the rubber composition constituting the tread part in 100 parts by mass of the rubber component is preferably the same as or greater than the silica content of the rubber composition constituting the at least one outermost surface member other than the tread part in 100 parts by mass of the rubber component. For example, in a case that the silica content (parts by mass) of the rubber composition constituting the tread part is within the above-described range, the silica content (parts by mass) of the rubber composition constituting the at least one outermost surface member other than the tread part is lower than the silica content (% by mass) of the rubber composition constituting the tread part preferably by 5 parts by mass or more, more preferably by 10 parts by mass or more, and further preferably by 15 parts by mass or more, or there is no problem even in a case that the at least one outermost surface member other than the tread part does not comprise silica.

### (Other fillers)

As fillers other than silica and carbon black, those commonly used in the tire industry conventionally, such as aluminum hydroxide, calcium carbonate, alumina, clay, talc, and the like, can be appropriately compounded within a range not impairing the effect of the present disclosure.

### (Content of filler)

From the viewpoint of reinforcing property and securing damping, a total content of the filler based on 100 parts by mass of the rubber component is preferably 10 parts by mass or more, more preferably 20 parts by mass or more, further preferably 30 parts by mass or more, further preferably 40 parts by mass or more, and further preferably 50 parts by mass or more. Moreover, from the viewpoint of durability improvement, the total content is preferably 200 parts by mass or less, more preferably 150 parts by mass or less, further preferably 130 parts by mass or less, further preferably 100 parts by mass or less, and further preferably 90 parts by mass or less.

In the rubber composition constituting the tread part, a total content of the filler based on 100 parts by mass of the rubber component is, most of all, preferably 40 parts by mass or more, more preferably 50 parts by mass or more, further preferably 60 parts by mass or more, further preferably 70 parts by mass or more, and further preferably 80 parts by mass or more. Moreover, the total content is preferably 200 parts by mass or less, more preferably 150 parts by mass or less, further preferably 130 parts by mass or less, and further preferably 120 parts by mass or less.

In the rubber composition constituting the at least one outermost surface member other than the tread part, a total content of the filler based on 100 parts by mass of the rubber component is, most of all, preferably 10 parts by mass or more, more preferably 20 parts by mass or more, further preferably 30 parts by mass or more, further preferably 40 parts by mass or more, and further preferably 50 parts by mass or more. Moreover, the total content is preferably 120 parts by mass or less, more preferably 100 parts by mass or less, and further preferably 90 parts by mass or less.

In the rubber composition constituting the tread part, a content of silica in 100% by mass of the filler is preferably 50% by mass or more, more preferably 60% by mass or more, further preferably 70% by mass or more, further preferably 80% by mass or more, further preferably 83% by mass or more, and further preferably 90% by mass or more. Moreover, in the rubber composition constituting the at least one outermost surface member other than the tread part, a content of silica in 100% by mass of the filler is preferably over 0% by mass, more preferably 50% by mass or more, further preferably 60% by mass or more, further preferably 70% by mass or more, further preferably 80% by mass or more, further preferably 83% by mass or more, and further preferably 90% by mass or more.

Besides, in a case that the filler consists of only carbon black and silica, when the total content of the filler and the content of either one of carbon black and silica are determined in accordance with the above, the content of the other one thereof is naturally determined.

### <Silane coupling agent>

Silica is preferably used in combination with a silane coupling agent. The silane coupling agent is not particularly limited, and any silane coupling agent conventionally used in combination with silica in the tire industry can be used, and examples thereof include, for example, a silane coupling agent having a mercapto group as follows; a silane coupling agent having a sulfide group, such as bis(3-triethoxysilylpropyl)disulfide, bis(3-triethoxysilylpropyl)tetrasulfide, and the like; a silane coupling agent having a vinyl group, such as vinyltriethoxysilane, vinyltrimethoxysilane, and the like; a silane coupling agent having an amino group, such as 3-aminopropyltriethoxysilane, 3-aminopropyltrimethoxysilane, 3-(2-aminoethyl) aminopropyltriethoxysilane, and the like; a glycidoxy-based silane coupling agent such as γ-glycidoxypropyltriethoxysilane, γ-glycidoxypropyltrimethoxysilane, and the like; a nitro-based silane coupling agent such as 3-nitropropyltrimethoxysilane, 3-nitropropyltriethoxysilane, and the like; a chloro-based silane coupling agent such as 3-chloropropyltrimethoxysilane, 3-chloropropyltriethoxysilane, and the like; and the like. Among them, the silane coupling agent preferably comprises at least one of a silane coupling agent having a sulfide group and/or a silane coupling agent having a mercapto group, and preferably comprises a silane coupling agent having a sulfide group. Examples of the silane coupling agent can include those manufactured by and/or commercially available from Momentive Performance Materials, Evonik Degussa, for example. These silane coupling agents may be used alone or two or more thereof may be used in combination.

The silane coupling agent having the mercapto group is preferably at least one of a compound represented by the following Formula (1) and a compound comprising a bond unit A represented by the following Formula (2) and a bond unit B represented by the following Formula (3):

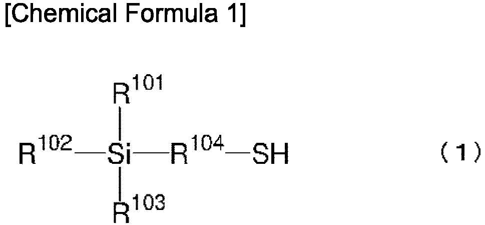

(Wherein, each of R¹⁰¹, R¹⁰², and R¹⁰³ independently represents a group represented by a C₁₋₁₂ alkyl, a C₁₋₁₂ alkoxy, or a -O-(R¹¹¹-O)_{z}-R¹¹² (Each of z R¹¹¹s independently represents a divalent hydrocarbon group having 1 to 30 carbon atoms; R¹¹² represents a C₁₋₃₀ alkyl, a C₂₋₃₀ alkenyl, a C₆₋₃₀ aryl, or a C₇₋₃₀ aralkyl; z represents an integer of 1 to 30); and R¹⁰⁴ represents a C₁₋₆ alkylene.)

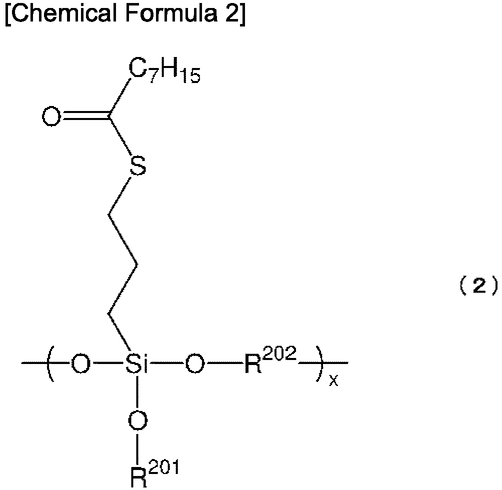

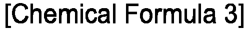

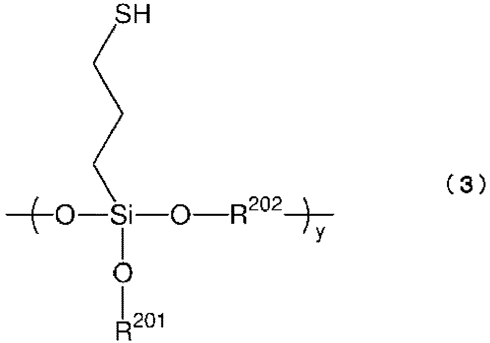

(Wherein, x represents an integer of 0 or more; y represents an integer of 1 or more; R²⁰¹ represents a C₁₋₃₀ alkyl, a C₂₋₃₀ alkenyl, or a C₂₋₃₀ alkynyl, which may be substituted with a hydrogen atom, a halogen atom, hydroxyl or carboxyl; R²⁰² represents a C₁₋₃₀ alkylene, a C₂₋₃₀ alkenylene, or a C₂₋₃₀ alkynylene; wherein R²⁰¹ and R²⁰² may form a ring structure.)

Examples of the compound represented by Formula (1) include, for example, 3-mercaptopropyltrimethoxysilane, 3-mercaptopropyltriethoxysilane, 2-mercaptoethyltrimethoxysilane, 2-mercaptoethyltriethoxysilane, and a compound represented by Formula (4) below. Examples of these silane coupling agents include those manufactured by Evonik Degussa, and the like, for example. These silane coupling agents may be used alone or two or more thereof may be used in combination.

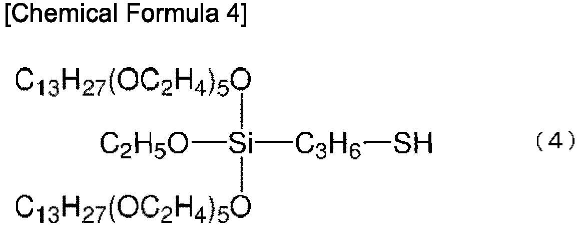

Examples of the compound comprising the bond unit A represented by Formula (2) and the bond unit B represented by Formula (3) include those manufactured by Momentive Performance Materials, and the like, for example. They may be used alone or two or more thereof may be used in combination.

When the rubber composition constituting the tread part comprises the silane coupling agent, a content thereof based on 100 parts by mass of silica is, in the rubber composition constituting the tread part, preferably 1.0 parts by mass or more, more preferably 3.0 parts by mass or more, and further preferably 5.0 parts by mass or more, from the viewpoint of enhancing the dispersibility of silica. Moreover, from the viewpoint of decreasing abrasion resistance, it is preferably 30 parts by mass or less, more preferably 20 parts by mass or less, and further preferably 15 parts by mass or less. Furthermore, when the rubber composition constituting the at least one outermost surface member other than the tread part comprises the silane coupling agent, a content thereof based on 100 parts by mass of silica is, in the rubber composition constituting the at least one outermost surface member other than the tread part, preferably 1.0 parts by mass or more, more preferably 3.0 parts by mass or more, and further preferably 5.0 parts by mass or more, from the viewpoint of enhancing the dispersibility of silica. Moreover, it is preferably 30 parts by mass or less, more preferably 20 parts by mass or less, and further preferably 15 parts by mass or less, from the viewpoint of preventing deterioration of abrasion resistance.

### <Aromatic ring-containing resin>

In the present disclosure, an aromatic ring-containing resin typically includes a resin in which monomers comprising an aromatic ring are polymerized. Specific examples of the aromatic ring-containing resin include an aromatic vinyl-based resin, a C9-based petroleum resin, a C5-C9-based petroleum resin, a terpene phenol resin, a phenol-based resin, and the like, for example. These aromatic ring-containing resins may be used alone or two or more thereof may be used in combination.

### (Aromatic vinyl-based resin)

An aromatic vinyl-based resin is a polymer that uses an aromatic vinyl-based monomer such as styrene as a constituting monomer and examples thereof includes a polymer in which the aromatic vinyl-based monomer is polymerized as a main component (50% by mass or more or over 50% by mass, preferably 60% by mass or more), and the like. Specifically, examples of the aromatic vinyl-based resin include homopolymers being each of styrene-based monomers (styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene, and the like) polymerized alone, copolymers being two or more of the styrene-based monomers copolymerized, and, in addition, those in which a styrene-based monomer is further combined with another monomer that can copolymerize therewith to copolymerize the combination of the styrene-based monomer and the other monomer. As the other monomers, acrylonitriles such as acrylonitrile, methacrylonitrile, and the like, unsaturated carbonic acids such as acrylic acid, methacrylic acid, and the like, unsaturated carbonic acid esters such as acrylic acid methyl, methacrylic acid methyl, and the like, dienes such as chloroprene, butadiene-isoprene, and the like, olefins such as 1-butene, 1-pentene; α,β-unsaturated carbonic acid such as anhydrous maleic acid, and the like or acid anhydride thereof; and the like may be exemplified. The aromatic vinyl-based resins may be used alone or two or more thereof may be used in combination.

As the aromatic vinyl-based resin, a homopolymer of α-methylstyrene or styrene or a copolymer of α-methylstyrene and styrene is preferable, and a copolymer of α-methylstyrene and styrene is more preferable. As the aromatic vinyl-based resin, for example, commercial products such as those manufactured by Arizona Chemical Company, and the like can be suitably used.

### (C9-based petroleum resin)

C9-based petroleum resins refer to resins in which a C9 fraction obtained by petroleum refining is polymerized, and those obtained by hydrogenation or modification thereof. Examples of the C9 fraction include, for example, a petroleum fraction equivalent to 8 to 10 carbon atoms such as vinyltoluene, alkylstyrene, indene, methyl indene, and the like. Specific examples of the C9-based petroleum resin include, for example, a coumarone indene resin, a coumarone resin, and an indene resin. The C9-based petroleum resin may be used alone or two or more thereof may be used in combination.

The coumarone-indene resins refer to resins comprising coumarone and indene as main monomer components constituting the skeleton (main chain) of the resins, and examples of the monomer components comprised in the skeleton, other than coumarone and indene, include styrene, α-methylstyrene, methyl indene, vinyltoluene, and the like. Coumaron resins refer to resins comprising coumarone as a main monomer component constituting the skeleton (main chain) of the resins. Indene resins refer to resins comprising indene as a main monomer component constituting the skeleton (main chain) of the resins.

### (C5-C9-based petroleum resin)

C5-C9-based petroleum resins refer to resins obtained by copolymerizing the C5 fraction and the C9 fraction obtained in petroleum refining, for example, and those obtained by hydrogenation or modification thereof. Examples of the C5 fraction include, for example, a petroleum fraction equivalent to 4 to 5 carbon atoms such as cyclopentadiene, pentene, pentadiene, isoprene, and the like. Examples of the C9 fraction include those described previously. As the C5-C9-based petroleum resins, for example, products commercially available from Zibo Luhua Hongjin New Material Co., Ltd., Shanghai Qilong Chemical Co., Ltd., Tosoh Corporation, and the like can be suitably used. The C5-C9-based petroleum resin may be used alone or two or more thereof may be used in combination.

### (Terpene phenol resin)

Terpene phenol resins refers to resins obtained by copolymerizing a terpene compound and an aromatic compound and those obtained by hydrogenation thereof. Here, examples of the terpene compound include α-pinene, β-pinene, limonene, dipentene, and the like, for example, and examples of the aromatic compound include styrene, α-methylstyrene, vinyltoluene, divinyltoluene, and the like, for example. The terpene phenol resin may be used alone or two or more thereof may be used in combination.

### (Phenol-based resin)

The phenol-based resin is a resin comprising a phenol skeleton in the structure thereof, and examples thereof include, for example, a phenolformaldehyde resin, an alkylphenolformaldehyde resin, an alkylphenol acetylene resin, an oil-modified phenolformaldehyde resin, and the like. The phenol-based resin may be used alone or two or more thereof may be used in combination.

### (Content of aromatic ring-containing resin)

A content of the aromatic ring-containing resin based on 100 parts by mass of the rubber component is, in the rubber composition constituting the tread part, preferably 1 parts by mass or more, more preferably 2 parts by mass or more, further preferably 3 parts by mass or more, further preferably 4 parts by mass or more, further preferably 5 parts by mass or more, and further preferably 6 parts by mass or more, from the viewpoint of the effect of the present disclosure. On the other hand, the content is, from a similar viewpoint, preferably 45 parts by mass or less, more preferably 44 parts by mass or less, further preferably 43 parts by mass or less, further preferably 42 parts by mass or less, further preferably 41 parts by mass or less, and further preferably 40 parts by mass or less. Moreover, a content of the aromatic ring-containing resin based on 100 parts by mass of the rubber component, in the rubber composition constituting the at least one outermost surface member other than the tread part, may be 1 parts by mass or more, may be 2 parts by mass or more, may be 3 parts by mass or more, or may be 0 parts, from the viewpoint of the effect of the present disclosure. On the other hand, the content is, from the viewpoint of the effect of the present disclosure, preferably 10 parts by mass or less, more preferably 6 parts by mass or less, and further preferably 4 parts by mass or less.

The rubber composition constituting the tread part preferably comprises the aromatic ring-containing resin with the content as described above, and the rubber composition constituting the at least one outermost surface member other than the tread part preferably comprises the aromatic ring-containing resin, as described previously, less than the rubber composition constituting the tread part, and, for example, less than the rubber composition constituting the tread part preferably by 2 parts by mass or more, more preferably by 4 parts by mass or more, and further preferably by 6 parts by mass or more. Alternatively, the rubber composition constituting the at least one outermost surface member other than the tread part does not have to comprise the aromatic ring-containing resin at all.

### (Other resins)

The rubber composition according to the present disclosure can also comprise resins other than those described above within a range not impairing the effect of the present disclosure. Examples of the resins as such include polyterpene-based resins and rosin-based resins that are commonly used in the tire industry, for example. These resins may be used alone or two or more thereof may be used in combination.

### (Polyterpene-based resin)

Examples of the polyterpene-based resins include those composed of at least one selected from terpene raw materials such as α-pinene, β-pinene, limonene, dipentene, and the like; and those obtainable by further hydrogenating them. The polyterpene-based resins may be used alone or two or more thereof may be used in combination.

### (Rosin-based resins)

Rosin-based resins are resins having, as a main component, a rosin acid obtained by processing pine rosin. The rosin-based resins are exemplified by naturally-produced rosin resins (polymerized rosins) such as gum rosin, wood rosin, tall oil rosin, and the like, which naturally-produced rosin resins have, as a main component, resin acids such as abietic acid, neoabietic acid, palustric acid, levopimaric acid, pimaric acid, isopimaric acid, dihydroabietic acid, and the like, and, in addition, hydrogenated rosin resins, modified rosin resins such as a rosin resin modified with unsaturated carbonic acid, a rosin-modified phenolic resin, and the like, rosin esters such as a rosin glycerol ester, a rosin ester modified with unsaturated carbonic acid, and the like, disproportionated rosin resins obtained by disproportionating a rosin resin, and the like. Rosin-based petroleum resins may be used alone or two or more thereof may be used in combination.

### <Other compounding agents>

The rubber composition according to the present disclosure can appropriately comprise compounding agents commonly used in the tire industry conventionally, such as, for example, oil, wax, an antioxidant, stearic acid, zinc oxide, an inorganic potassium salt, a vulcanizing agent such as sulfur, and the like, a vulcanization accelerator, and the like, in addition to the previously-described components.

### (Oil)

Examples of oil include, for example, a process oil, a vegetable oil and fat, an animal oil and fat, and the like. Examples of the process oil include a paraffin-based process oil, a naphthene-based process oil, an aromatic-based process oil, and the like. Moreover, as an environmental measure, a process oil having a low content of a polycyclic aromatic compound (PCA) can be used. Examples of the process oil having a low content of a PCA include a treated distillate aromatic extract (TDAE), which is an aromatic-based process oil being reextracted; an aromatic substitute oil being a mixed oil of asphalt and naphthenic oil; mild extraction solvates (MES); a heavy naphthenic oil; and the like.

When the rubber composition constituting the tread part comprises the oil, the content thereof based on 100 parts by mass of the rubber component is, in the rubber composition constituting the tread part, preferably 1 parts by mass or more, more preferably 5 parts by mass or more, and further preferably 10 parts by mass or more, from the viewpoint of processability. On the other hand, the content is preferably 50 parts by mass or less, more preferably 45 parts by mass or less, and further preferably 40 parts by mass or less, from the viewpoints of fuel efficiency and durability. Moreover, when the rubber composition constituting the at least one outermost surface member other than the tread part comprises the oil, the content thereof based on 100 parts by mass of the rubber component is, in the rubber composition constituting the at least one outermost surface member other than the tread part, preferably 1 parts by mass or more, more preferably 2 parts by mass or more, and further preferably 3 parts by mass or more, from the viewpoint of processability. On the other hand, the content is preferably 20 parts by mass or less, more preferably 15 parts by mass or less, and further preferably 10 parts by mass or less, from the viewpoints of fuel efficiency and durability. Besides, in the present specification, the content of oil also includes an amount of oil contained in an oil-extended rubber.

### (Wax)

When the rubber composition comprises the wax, the content thereof based on 100 parts by mass of the rubber component is, from the viewpoint of weather resistance of a rubber, preferably 0.5 parts by mass or more and more preferably 1 parts by mass or more. Moreover, it is preferably 10 parts by mass or less and more preferably 5 parts by mass or less, from the viewpoint of preventing whitening of a tire due to bloom.

### (Antioxidant)

The antioxidant is not particularly limited, and examples thereof include, for example, an antioxidant such as each amine-based, quinoline-based, quinone-based, phenol-based, and imidazole-based compound, and a carbamate metal salt.

When the rubber composition comprises the antioxidant, the content thereof based on 100 parts by mass of the rubber component is, from the viewpoint of ozone crack resistance of a rubber, preferably 0.5 parts by mass or more and more preferably 1 parts by mass or more. Moreover, it is preferably 10 parts by mass or less and more preferably 5 parts by mass or less, from the viewpoints of abrasion resistance and wet grip performance.

### (Stearic acid)

As stearic acid, any stearic acid used in the tire industry can be suitably used.

### (Zinc oxide)

As zinc oxide, any zinc oxide used in the tire industry can be suitably used.

### (Inorganic potassium salt)

The inorganic potassium salt can be used to improve extrusion processability. Examples of the inorganic potassium salt includes, for example, potassium carbonate, potassium hydrogen carbonate, potassium tetraborate, and the like, and, among them, potassium tetraborate is preferable. Inorganic potassium salts may be used alone or two or more thereof may be used in combination.

### (Vulcanizing agent)

As the vulcanizing agent, sulfur is suitably used. As sulfur, a powdered sulfur, an oil-treated sulfur, a precipitated sulfur, a colloidal sulfur, an insoluble sulfur, a highly dispersible sulfur, and the like can be used.

When the rubber composition constituting the tread part comprises sulfur as the vulcanizing agent, a content of sulfur based on 100 parts by mass of the rubber component is, in the rubber composition constituting the tread part, preferably 0.5 parts by mass or more, more preferably 0.8 parts by mass or more, and further preferably 1.0 parts by mass or more, from the viewpoint of securing a sufficient vulcanization reaction. On the other hand, the content is preferably 6.0 parts by mass or less, more preferably 5.0 parts by mass or less, and further preferably 4.0 parts by mass or less, from the viewpoint of preventing deterioration. Moreover, when the rubber composition constituting the at least one outermost surface member other than the tread part comprises sulfur as the vulcanizing agent, a content of sulfur based on 100 parts by mass of the rubber component is, in the rubber composition constituting the at least one outermost surface member other than the tread part, preferably 0.5 parts by mass or more, more preferably 0.8 parts by mass or more, and further preferably 1.2 parts by mass or more, from the viewpoint of securing a sufficient vulcanization reaction. On the other hand, the content is preferably 7.0 parts by mass or less, more preferably 6.0 parts by mass or less, and further preferably 5.0 parts by mass or less, from the viewpoint of preventing deterioration.

Examples of vulcanizing agents other than sulfur include, for example, sulfur atom-containing organic crosslinking agents such as alkylphenol-sulfur chloride condensate, 1,6-hexamethylene-sodium dithiosulfate dehydrate, 1,6-bis(N,N'-dibenzylthiocarbamoyldithio)hexane, and the like, organic peroxides such as dicumyl peroxide, and the like. As these vulcanizing agents other than sulfur, those manufactured by Taoka Chemical Co., Ltd., Flexsys, LANXESS, and the like can be used.

### (Vulcanization accelerator)

The vulcanization accelerator is not particularly limited, and examples of the vulcanization accelerators include, for example, sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators, and, among them, sulfenamide-based vulcanization accelerators and guanidine-based vulcanization accelerators are preferable from the viewpoint that desired effects are more suitably obtained, and a combined use of these two is more preferable.

Examples of the sulfenamide-based vulcanization accelerator include, for example, N-cyclohexyl-2-benzothiazolylsulfenamide (CBS), N-t-butyl-2-benzothiazolylsulfenamide (TBBS), N-oxyethylene-2-benzothiazolylsulfenamide, N,N'-diisopropyl-2-benzothiazolylsulfenamide, N,N-dicyclohexyl-2-benzothiazolylsulfenamide, and the like. Examples of the thiazole-based vulcanization accelerator include 2-mercaptobenzothiazole, dibenzothiazolyl disulfide, and the like. Examples of the thiuram-based vulcanization accelerator include tetramethylthiuram monosulfide, tetramethylthiuram disulfide, tetrabenzylthiuram disulfide (TBzTD), and the like. Examples of the guanidine-based vulcanization accelerator include 1,3-diphenylguanidine (DPG), di-o-tolylguanidine, o-tolylbiguanidine, and the like. These vulcanization accelerators may be used alone or two or more thereof may be used in combination. Examples of a preferable combination include TBBS and DPG, for example.

When the rubber composition constituting the tread part comprises the vulcanization accelerator, the content thereof based on 100 parts by mass of the rubber component is, in the rubber composition constituting the tread part, preferably 1 parts by mass or more and more preferably 2 parts by mass or more. On the other hand, the content is preferably 8 parts by mass or less, more preferably 7 parts by mass or less, and further preferably 6 parts by mass or less. Moreover, when the rubber composition constituting the at least one outermost surface member other than the tread part comprises the vulcanization accelerator, the content thereof based on 100 parts by mass of the rubber component is, in the rubber composition constituting the at least one outermost surface member other than the tread part, preferably 0.5 parts by mass or more, more preferably 1 parts by mass or more, and further preferably 1.5 parts by mass or more. On the other hand, the content is preferably 6 parts by mass or less, more preferably 5 parts by mass or less, and further preferably 4 parts by mass or less. When the content of the vulcanization accelerators is within the above-described ranges, there is a tendency to be able to secure breaking strength and elongation.

### <Rubber composition>

The rubber composition can be manufactured by a known method. For example, it can be manufactured by kneading each of the previously-described components using a rubber kneading apparatus such as an open roll, a closed type kneader (Sunbury mixer, kneader, etc.), and the like.

The kneading step comprises, for example, a base kneading step of kneading compounding agents and additives other than vulcanizing agents and vulcanization accelerators, and a final kneading (F kneading) step of adding vulcanizing agents and vulcanization accelerators to the kneaded product obtained in the base kneading step and kneading them. Furthermore, the base kneading step can be divided into a plurality of steps, if desired. Kneading conditions are not particularly limited, and, for example, a method of kneading at a discharge temperature of 150 to 170°C for 1 to 10 minutes in the base kneading step and kneading at 70 to 110°C for 1 to 5 minutes in the final kneading step is exemplified.

### <Tire>

The tire according to the present disclosure comprises a tread and at least one outermost surface member other than the tread part, which tread part and at least one outermost surface member other than the tread part are composed of the above-described rubber composition, and can be used for a tire for a passenger car, a tire for a truck/bus, a run flat tire, a tire for a motorcycle, and the like. Moreover, it can be used for a summer tire, a winter tire, and an all-season tire.

The tire of the present disclosure can be manufactured by a usual method. For example, the tire can be manufactured by extruding, from unvulcanized rubber compositions obtained above, the rubber composition for the tread into shapes of the tread, and extruding therefrom the rubber composition for the at least one outermost surface member other than the tread part into shapes of the at least one outermost surface member, attaching them together with other tire members on a tire molding machine, and molding them by a usual method to form an unvulcanized tire, followed by heating and pressurizing this unvulcanized tire in a vulcanizing machine. Vulcanization conditions are not particularly limited, and, for example, a method of vulcanizing at 150 to 200°C for 10 to 30 minutes is exemplified.

### EXAMPLE

Although the present disclosure will be described based on Examples below, the present disclosure is not to be limited only to these Examples.

### <Various chemicals>

Various chemicals used in Examples and Comparative examples are shown below:
NR: TSR20
SBR1: Modified solution-polymerized SBR manufactured in below-described Manufacturing example 1 (styrene content: 30% by mass, vinyl bond amount: 52 mol%, Mw: 250,000, non-oil extended product)
SBR2: Tufdene 4850 (non-modified S-SBR, styrene content: 40% by mass, vinyl content: 46 mol%, Mw: 350,000, comprising 50 parts by mass of an oil content based on 100 parts by mass of a rubber solid content), manufactured by Asahi Kasei Corporation
Multi-component polymer 1: Hydrogenated SBR manufactured in below-described Manufacturing example 2
Multi-component polymer 2: Modified hydrogenated SBR manufactured in below-described Manufacturing example 3
Multi-component polymer 3: DYNARON (registered trademark) 2324P (hydrogenated SBR), manufactured by JSR Corporation
Multi-component polymer 4: Tuftec (registered trademark) P1083 (SEBS), manufactured by Asahi Kasei Corporation
BR: UBEPOL BR (registered trademark) 150B (vinyl bond amount: 1.5 mol%, cis 1,4-content: 97% by mass, Mw: 440,000), manufactured by Ube Industries, Ltd.
Carbon black 1: Show Black N110 (N₂SA: 142 m²/g), manufactured by Cabot Japan K.K.
Carbon black 2: Show Black N330 (N₂SA: 79 m²/g), manufactured by Cabot Japan K.K.
Silica: ULTRASIL (registered trademark) VN3 (N₂SA: 175 m²/g), manufactured by Evonik Degussa
Silane coupling agent: Si69 (bis(3-triethoxysilylpropyl)tetrasulfide), manufactured by Evonik Degussa
Oil: NH-70S (aromatic-based oil), manufactured by Idemitsu Kosan Co.
Aromatic ring-containing resin: Sylvatraxx 4401 (copolymer of α-methylstyrene and styrene, softening point: 85°C), manufactured by Arizona Chemical Company, LLC
Wax: Ozoace0355, manufactured by Nippon Seiro Co., Ltd.
Antioxidant: Antigen 6C (N-(1,3-dimethylbutyl)-N'-phenyl-p-phenylenediamine), manufactured by Sumitomo Chemical Co., Ltd.
Stearic acid: Stearic acid "Tsubaki", manufactured by NOF CORPORATION
Zinc oxide: "Ginrei R", manufactured by Toho Zinc Co., Ltd.
Inorganic potassium salt: potassium tetraborate tetrahydrate (K2B₄ O₇ ·4H₂O), manufactured by Yoneyama Pharmaceutical Co., Ltd.
Sulfur: HK-200-5 (5% oil-containing powdered sulfur), manufactured by Hosoi Chemical Industry Co., Ltd.
Vulcanization accelerator 1: Nocceler NS-G (N-tert-butyl-2-benzothiazolylsulfenamide (TBBS)), manufactured by Ouchi Shinko Chemical Industrial Co., Ltd.
Vulcanization accelerator 2: Nocceler D (1,3-diphenylguanidine (DPG)), manufactured by Ouchi Shinko Chemical Industrial Co., Ltd.

### (Manufacturing example 1)

### Manufacturing of SBR1

Cyclohexane, tetrahydrofuran, styrene, and 1,3-butadiene were charged into a nitrogen-substituted autoclave reactor. The temperature of the contents of the reactor was adjusted to 20°C, and then n-butyllithium was added to initiate polymerization. Polymerization was performed under an adiabatic condition, and the temperature reached 85°C of the maximum temperature. When a polymerization conversion rate reached 99%, 1,3-butadiene was added, and after further polymerization for 5 minutes, N,N-bis(trimethylsilyl)-3-aminopropyltrimethoxysilane was added as a modifying agent to perform reaction. After completion of the polymerization reaction, 2,6-di-tert-butyl-p-cresol was added. Next, solvent was removed by steam stripping, drying was carried out by a heat roll which temperature was adjusted to 110°C to obtain an SBR1.

### (Manufacturing example 2)

### Manufacturing of hydrogenated SBR

A sufficiently nitrogen-substituted heat-resistant reaction vessel was charged with 2,000 mL of n-hexane, 68 g of styrene, 132 g of butadiene, 2.5 g of THF, and 0.45 mmol of n-butyllithium, followed by stirring at 50°C for five hours to cause a polymerization reaction. Next, the reaction solution was stirred for 20 minutes while supplying hydrogen gas at a pressure of 0.4 Mpa gauge to react the unreacted polymer terminal lithium with hydrogen into lithium hydride. Hydrogenation was performed using a catalyst mainly composed of titanocene dichloride at a hydrogen gas supply pressure of 0.7 MPa gauge and a reaction temperature of 90°C. Once the cumulative amount of absorbed hydrogen to be the amount corresponding to the target hydrogenation rate was reached, the reaction temperature was brought to room temperature, the hydrogen pressure was returned to an ordinary pressure and then the reaction solution was drawn from the reaction vessel and introduced into water with stirring. The solvent was removed by steam stripping to obtain Multi-component polymer 1 (hydrogenated SBR).

### (Manufacturing example 3)

### Manufacturing of modified hydrogenated SBR

Multi-component polymer 2 (modified hydrogenated SBR) was obtained by processing as in Manufacturing example 2, except that after the polymerization reaction and before the hydrogenation process, the reaction vessel was charged with 0.15 mol of N,N-bis(trimethylsilyl)aminopropylmethyldiethoxysilane (modifier), followed by stirring at 0°C for one hour and, in the hydrogenation process, the cumulative amount of absorbed hydrogen was adjusted so as to obtain the target hydrogenation ratio.

The characteristics of the multi-component polymer are shown in Table 1 below:

### [Table 1]

**Table 1**

| | Multi-component polymer | | | |
|---|---|---|---|---|
| | 1 | 2 | 3 | 4 |
| Hydrogenation ratio (mol%) | 94 | 93 | 99 | 80 |
| Styrene content (% by mass) | 34 | 34 | 16 | 20 |
| Weight-average molecular weight (Mw) | 290,000 | 300,000 | 150,000 | 90,000 |
| Mw/Mn | 1.2 | 1.3 | 1.2 | 1.3 |
| Glass transition temperature (Tg) (°C) | -30 | -30 | -50 | -65 |

### <Examples and Comparative examples>

In accordance with Table 1, for each of the compounding formulations of the tread part (Trd) and the sidewall (SW), using a 1.7 L closed Banbury mixer, chemicals other than sulfur and vulcanization accelerators were kneaded for 5 minutes until a discharge temperature reached 150 to 160°C to obtain kneaded products, and then, using a twin-screw open roll, sulfur and vulcanization accelerators were added to each of the obtained kneaded products, and the mixtures were kneaded for 4 minutes until the temperature reached 105°C to obtain the respective unvulcanized rubber compositions.

The unvulcanized rubber composition obtained from the compounding formulations of the tread part was extruded into shapes of a tread, the unvulcanized rubber composition obtained from the compounding formulations of the sidewall was extruded into shapes of a sidewall and these were attached together with other tire members to produce an unvulcanized tire The unvulcanized tire was press vulcanized at 170°C for 12 minutes to produce a test tire (195/65R15 91V).

### (Crack resistance)

Each test tire was assembled to a JIS standard rim 15 x 6 JJ, was filled with normal air pressure, was loaded with the maximum load corresponding to this air pressure from air pressure-load rating correspondence table in JATMA YEAR BOOK, was made to run on a drum at the speed of 80 km/h, and the running distance at which damage that could be confirmed by visual inspection occurred at each of the tread, the sidewall, and the interface between the tread and the sidewall was determined. With the running distance of Comparative example 1 being set to be 100, each of the tread, the sidewall, and the interface between the tread and the sidewall is shown with an index. The greater the index, the better the crack resistance.

### [Table 2]

**Table 2**

| | Example | | | | | | | | | |
|---|---|---|---|---|---|---|---|---|---|---|
| | 1 | | 2 | | 3 | | 4 | | 5 | |
| | Trd | SW | Trd | SW | Trd | SW | Trd | SW | Trd | SW |
| Compounding (parts by mass) | | | | | | | | | | |
| NR | - | 50 | - | 50 | - | 50 | - | 50 | - | 50 |
| SBR1 | 50 | - | 35 | - | - | - | - | - | - | - |
| SBR2 | - | - | - | - | 52.5 | - | 52.5 | - | 52.5 | - |
| Multi-component polymer 1 | 20 | 20 | 35 | 30 | 35 | 30 | 35 | 30 | 35 | 30 |
| Multi-component polymer 2 | - | - | - | - | - | - | - | - | - | - |
| Multi-component polymer 3 | - | - | - | - | - | - | - | - | - | - |
| Multi-component polymer 4 | - | - | - | - | - | - | - | - | - | - |
| BR | 30 | 30 | 30 | 20 | 30 | 20 | 30 | 20 | 30 | 20 |
| Carbon black 1 | 15 | - | 15 | - | 15 | - | 15 | - | 15 | - |
| Carbon black 2 | - | 40 | - | 40 | - | 40 | - | 15 | - | 15 |
| Silica | 75 | - | 75 | - | 75 | - | 75 | 60 | 75 | 60 |
| Silane coupling agent | 6 | - | 6 | - | 6 | - | 6 | 4.8 | 6 | 4.8 |
| Oil | 25 | 5 | 25 | 5 | 7.5 | 5 | 7.5 | 5 | 1.5 | 5 |
| Aromatic ring-containing resin | - | - | - | - | - | - | - | - | 6 | - |
| Wax | 1 | 1 | 1 | 1 | 1 | 1 | 1 | 1 | 1 | 1 |
| Antioxidant | 1 | 2.5 | 1 | 2.5 | 1 | 2.5 | 1 | 2.5 | 1 | 2.5 |
| Stearic acid | 2 | 2 | 2 | 2 | 2 | 2 | 2 | 2 | 2 | 2 |
| Zinc oxide | 2 | 2 | 2 | 2 | 2 | 2 | 2 | 2 | 2 | 2 |
| Inorganic potassium salt | 1 | 1 | 1 | 1 | 1 | 1 | 1 | 1 | 1 | 1 |
| Sulfur | 1.3 | 1.5 | 1.3 | 1.5 | 1.3 | 1.5 | 1.3 | 1.5 | 1.3 | 1.5 |
| Vulcanization accelerator 1 | 2 | 1 | 2 | 1 | 2 | 1 | 2 | 1 | 2 | 1 |
| Vulcanization accelerator 2 | 2 | 1.5 | 2 | 1.5 | 2 | 1.5 | 2 | 1.5 | 2 | 1.5 |
| Aromatic vinyl unit content (% by mass) in rubber component | 20 | 7 | 21 | 10 | 33 | 10 | 33 | 10 | 33 | 10 |
| Silica content (% by mass) in filler | 83 | 0 | 83 | 0 | 83 | 0 | 83 | 80 | 83 | 80 |
| Tg (°C) of rubber composition | -19 | -44 | -21 | -40 | -18 | -40 | -18 | -37 | -15 | -37 |

| Evaluation | | | | | | | | | | |
|---|---|---|---|---|---|---|---|---|---|---|
| Crack resistance | 110 | 110 | 120 | 120 | 120 | 120 | 120 | 130 | 130 | 130 |
| Trd/SW interface crack resistance | 110 | | 120 | | 125 | | 130 | | 140 | |

-continued-

| | Example | | | | | | | |
|---|---|---|---|---|---|---|---|---|
| | 6 | | 7 | | 8 | | 9 | |
| | Trd | SW | Trd | SW | Trd | SW | Trd | SW |
| Compounding (parts by mass) | | | | | | | | |
| NR | - | 50 | - | 50 | - | 50 | 5 | 50 |
| SBR1 | - | - | - | - | - | - | - | - |
| SBR2 | 52.5 | - | 52.5 | - | 52.5 | - | 45 | - |
| Multi-component polymer 1 | - | - | - | - | - | - | 35 | 30 |
| Multi-component polymer 2 | 35 | 30 | - | - | - | - | - | - |
| Multi-component polymer 3 | - | - | 35 | 30 | - | - | - | - |
| Multi-component polymer 4 | - | - | - | - | 35 | 30 | - | - |
| BR | 30 | 20 | 30 | 20 | 30 | 20 | 30 | 20 |
| Carbon black 1 | 15 | - | 15 | - | 15 | - | 15 | - |
| Carbon black 2 | - | 40 | - | 40 | - | 40 | - | 40 |
| Silica | 75 | - | 75 | - | 75 | - | 75 | - |
| Silane coupling aqent | 6 | - | 6 | - | 6 | - | 6 | - |
| Oil | 7.5 | 5 | 7.5 | 5 | 7.5 | 5 | 7.5 | 5 |
| Aromatic ring-containing resin | - | - | - | - | - | - | - | - |
| Wax | 1 | 1 | 1 | 1 | 1 | 1 | 1 | 1 |
| Antioxidant | 1 | 2.5 | 1 | 2.5 | 1 | 2.5 | 1 | 2.5 |
| Stearic acid | 2 | 2 | 2 | 2 | 2 | 2 | 2 | 2 |
| Zinc oxide | 2 | 2 | 2 | 2 | 2 | 2 | 2 | 2 |
| Inorganic potassium salt | 1 | 1 | 1 | 1 | 1 | 1 | 1 | 1 |
| Sulfur | 1.3 | 1.5 | 1.3 | 1.5 | 1.3 | 1.5 | 1.3 | 1.5 |
| Vulcanization accelerator 1 | 2 | 1 | 2 | 1 | 2 | 1 | 2 | 1 |
| Vulcanization accelerator 2 | 2 | 1.5 | 2 | 1.5 | 2 | 1.5 | 2 | 1.5 |
| Aromatic vinyl unit content (% by mass) in rubber component | 33 | 10 | 27 | 5 | 29 | 6 | 30 | 10 |
| Silica content (% by mass) in filler | 83 | 0 | 83 | 0 | 83 | 0 | 83 | 0 |
| Tg (°C) of rubber composition | -19 | -38 | -23 | -55 | -29 | -72 | -22 | -40 |

| Evaluation | | | | | | | | |
|---|---|---|---|---|---|---|---|---|
| Crack resistance | 133 | 130 | 135 | 135 | 138 | 140 | 125 | 120 |
| Trd/SW interface crack resistance | 140 | | 131 | | 129 | | 130 | |

**-continued-**

| | Comparative example | | | | | | | |
|---|---|---|---|---|---|---|---|---|
| | 1 | | 2 | | 3 | | 4 | |
| | Trd | SW | Trd | SW | Trd | SW | Trd | SW |
| Compounding (parts by mass) | | | | | | | | |
| NR | - | 50 | - | 50 | - | 50 | 50 | - |
| SBR1 | 70 | - | 50 | - | 70 | - | - | 50 |
| SBR2 | - | - | - | - | - | - | - | - |
| Multi-component polymer 1 | - | - | 20 | - | - | 20 | 20 | 20 |
| Multi-component polymer 2 | - | - | - | - | - | - | - | - |
| Multi-component polymer 3 | - | - | - | - | - | - | - | - |
| Multi-component polymer 4 | - | - | - | - | - | - | - | - |
| BR | 30 | 50 | 30 | 50 | 30 | 30 | 30 | 30 |
| Carbon black 1 | 15 | - | 15 | - | 15 | - | - | 15 |
| Carbon black 2 | - | 40 | - | 40 | - | 40 | 40 | - |
| Silica | 75 | - | 75 | - | 75 | - | - | 75 |
| Silane coupling aqent | 6 | - | 6 | - | 6 | - | - | 6 |
| Oil | 25 | 5 | 25 | 5 | 25 | 5 | 5 | 25 |
| Aromatic ring-containing resin | - | - | - | - | - | - | - | - |
| Wax | 1 | 1 | 1 | 1 | 1 | 1 | 1 | 1 |
| Antioxidant | 1 | 2.5 | 1 | 2.5 | 1 | 2.5 | 2.5 | 1 |
| Stearic acid | 2 | 2 | 2 | 2 | 2 | 2 | 2 | 2 |
| Zinc oxide | 2 | 2 | 2 | 2 | 2 | 2 | 2 | 2 |
| Inorganic potassium salt | 1 | 1 | 1 | 1 | 1 | 1 | 1 | 1 |
| Sulfur | 1.3 | 1.5 | 1.3 | 1.5 | 1.3 | 1.5 | 1.5 | 1.3 |
| Vulcanization accelerator 1 | 2 | 1 | 2 | 1 | 2 | 1 | 1 | 2 |
| Vulcanization accelerator 2 | 2 | 1.5 | 2 | 1.5 | 2 | 1.5 | 1.5 | 2 |
| Aromatic vinyl unit content (% by mass) in rubber component | 18 | 0 | 20 | 0 | 18 | 7 | 7 | 20 |
| Silica content (% by mass) in filler | 83 | 0 | 83 | 0 | 83 | 0 | 0 | 83 |
| Tg (°C) of rubber composition | -21 | -51 | -19 | -51 | -21 | -44 | -44 | -19 |

| Evaluation | | | | | | | | |
|---|---|---|---|---|---|---|---|---|
| Crack resistance | 100 | 100 | 110 | 100 | 100 | 110 | 110 | 110 |
| Trd/SW interface crack resistance | 100 | | 80 | | 80 | | 70 | |

Based on the above-described results, with a tire of the present disclosure, it is evident that there is an improvement in crack resistance.

### REFERENCE SIGNS LIST

1 Tire
2 Tread part
3 Sidewall
4 Clinch part
5 Bead core
6 Bead apex
7 Breaker
8 Rim
9 Wing
10 Clinch apex

## Claims

1. A tire comprising a tread part, and at least one outermost surface member other than the tread part,
wherein a rubber composition constituting the tread part comprises a rubber component comprising a diene-based rubber and a multi-component polymer, the multi-component polymer comprising an aromatic vinyl unit, a nonconjugated olefin unit, and a conjugated diene unit,
wherein a rubber composition constituting the at least one outermost surface member other than the tread part comprises a rubber component comprising a diene-based rubber and a multi-component polymer, the multi-component polymer comprising an aromatic vinyl unit, a nonconjugated olefin unit, and a conjugated diene unit, and,
wherein when, for each of individual rubber components of the rubber component of the tread part, a value obtained by multiplying a mass fraction in the rubber component and the aromatic vinyl unit content (% by mass) is calculated and these values are summed to calculate an aromatic vinyl unit content T_{Arm} (% by mass) in the rubber component of the tread part, and, on the other hand, for each of individual rubber components constituting the rubber component of the at least one outermost surface member other than the tread part, a value obtained by multiplying a mass fraction in the rubber component and the aromatic vinyl unit content (% by mass) is calculated and these values are summed to calculate an aromatic vinyl unit content OMM_{Arm} (% by mass) in the rubber component of the at least one outermost surface member other than the tread part, T_{Arm} is greater than OMM_{Arm}.

2. The tire of claim 1,
wherein a content of the multi-component polymer comprised in the rubber composition constituting the tread part is 5% by mass or more in 100% by mass of the rubber component; and
wherein a content of the multi-component polymer comprised in the rubber composition constituting the at least one outermost surface member other than the tread part is 2% by mass or more in 100% by mass of the rubber component.

3. The tire of claim 1 or 2, wherein the T_{Arm} is 15% by mass or more.

4. The tire of any one of claims 1 to 3,
wherein the rubber composition constituting the tread comprises 40 parts by mass or more of a filler based on 100 parts by mass of the rubber component, and the filler comprises 50% by mass or more of silica, and
wherein the rubber composition constituting the at least one outermost surface member other than the tread part comprises 10 parts by mass or more of a filler based on 100 parts by mass of the rubber component, and the filler comprises over 0% by mass of silica.

5. The tire of any one of claims 1 to 4, wherein the rubber composition constituting the tread part comprises 1 to 45 parts by mass of an aromatic ring-containing resin based on 100 parts by mass of the rubber component.

6. The tire of any one of claims 1 to 5,
wherein the diene-based rubber comprised in the rubber composition constituting the tread part comprises a natural rubber, and
wherein the diene-based rubber comprised in the rubber composition constituting the at least one outermost surface member other than the tread part comprises a natural rubber.

7. The tire of claim 6, wherein a content of the natural rubber of the tread part in 100% by mass of the rubber component is less than a content of the natural rubber of the at least one outermost surface member other than the tread part in 100% by mass of the rubber component.

8. The tire of any one of claims 5 to 7, wherein the rubber composition constituting the at least one outermost surface member other than the tread part does not comprise the aromatic ring-containing resin, or parts by mass of the aromatic ring-containing resin based on 100 parts by mass of the rubber component, which aromatic ring-containing resin is comprised in the rubber composition of the at least one outermost surface member other than the tread part, is less than parts by mass of the aromatic ring-containing resin based on 100 parts by mass of the rubber component, which aromatic ring-containing resin is comprised in the rubber composition constituting the tread part.

9. The tire of any one of claims 1 to 8, wherein the glass transition temperature of the rubber composition of the tread is higher than the glass transition temperature of the rubber composition of the at least one outermost surface member other than the tread part.

10. The tire of any one of claims 1 to 9, wherein, in a case that the multi-component polymer comprised in the rubber composition constituting the tread part is a hydrogenated polymer of a polymer consisting of an aromatic vinyl unit and a conjugated diene unit, the hydrogenation ratio thereof is 30 mol% or more and less than 100 mol%, and, in a case that the
multi-component polymer comprised in the rubber composition constituting the at least one outermost surface member other than the tread part is a hydrogenated polymer of a polymer consisting of an aromatic vinyl unit and a conjugated diene unit, the hydrogenation ratio thereof is 30 mol% or more and less than 100 mol%.

11. The tire of any one of claims 1 to 10, wherein the at least one outermost surface member other than the tread part is at least one selected from the group consisting of a wing, a sidewall, and a clinch apex.

12. The tire of any one of claims 1 to 10, wherein the at least one outermost surface member other than the tread part is a sidewall.

## Patentansprüche

1. Reifen, der einen Laufstreifenteil und mindestens ein äußeres Oberflächenelement außer dem Laufstreifenabschnitt umfasst,
wobei eine Kautschukzusammensetzung, die den Laufstreifenteil bildet, eine Kautschukkomponente umfasst, die einen Dien-basierten Kautschuk und ein Mehrkomponentenpolymer umfasst, wobei das Mehrkomponentenpolymer eine aromatische Vinyleinheit, eine nicht-konjugierte Olefin-Einheit und eine konjugierte Dien-Einheit umfasst,
wobei eine Kautschukzusammensetzung, die das mindestens eine äußere Oberflächenelement außer dem Laufstreifenteil bildet, eine Kautschukkomponente umfasst, die einen Dien-basierten Kautschuk und ein Mehrkomponentenpolymer umfasst, wobei das Mehrkomponentenpolymer eine aromatische Vinyleinheit, eine nicht-konjugierte Olefin-Einheit und eine konjugierte Dien-Einheit umfasst, und
wobei, wenn für jede der einzelnen Kautschukkomponenten der Kautschukkomponente des Laufstreifenteils ein durch Multiplizieren eines Massenbruchteils in der Kautschukkomponente und des Gehalts an aromatischen Vinyleinheiten (Massen-%) erhaltener Wert berechnet wird, und diese Werte summiert werden, um einen Gehalt an aromatischen Vinyleinheiten T_{Arm} (Massen-%) in der Kautschukkomponente des Laufstreifenteils zu berechnen, und andererseits für jede der einzelnen Kautschukkomponenten, welche die Kautschukkomponente des mindestens einen äußeren Oberflächenelements außer dem Laufstreifenteil bilden, ein durch Multiplizieren eines Massenbruchteils in der Kautschukkomponente und des Gehalts an aromatischen Vinyleinheiten (Massen-%) erhaltener Wert berechnet wird, und diese Werte summiert werden, um einen Gehalt an aromatischen Vinyleinheiten OMM_{Arm} (Massen-%) in der Kautschukkomponente des mindestens einen äußeren Oberflächenelements außer dem Laufstreifenteil zu berechnen, T_{Arm} größer als OMM_{Arm} ist.

2. Reifen nach Anspruch 1,
wobei ein Gehalt des Mehrkomponentenpolymers, das von der Kautschukzusammensetzung umfasst ist, die den Laufstreifenteil bildet, 5 Massen-% oder mehr in 100 Massen-% der Kautschukkomponente beträgt; und
wobei ein Gehalt des Mehrkomponentenpolymers, das von der Kautschukzusammensetzung umfasst ist, die das mindestens eine äußere Oberflächenelement außer dem Laufstreifenteil bildet, 2 Massen-% oder mehr in 100 Massen-% der Kautschukkomponente beträgt.

3. Reifen nach Anspruch 1 oder 2, wobei der T_{Arm} 15 Massen-% oder mehr beträgt.

4. Reifen nach einem der Ansprüche 1 bis 3,
wobei die Kautschukzusammensetzung, die den Laufstreifen bildet, 40 Massenteile oder mehr eines Füllstoffes, bezogen auf 100 Massenteile der Kautschukkomponente, umfasst, und der Füllstoff 50 Massen-% oder mehr an Siliziumdioxid umfasst, und
wobei die Kautschukzusammensetzung, die das mindestens eine äußere Oberflächenelement außer dem Laufstreifenteil bildet, 10 Massenteile oder mehr eines Füllstoffes, bezogen auf 100 Massenteile der Kautschukkomponente, umfasst, und der Füllstoff über 0 Massen-% an Siliziumdioxid umfasst.

5. Reifen nach einem der Ansprüche 1 bis 4, wobei die Kautschukzusammensetzung, die den Laufstreifenteil bildet, 1 bis 45 Massenteile eines Aromatenring-haltigen Harzes, bezogen auf 100 Massenteile der Kautschukkomponente, umfasst.

6. Reifen nach einem der Ansprüche 1 bis 5,
wobei der Dien-basierte Kautschuk, der von der Kautschukzusammensetzung umfasst ist, die den Laufstreifenteil bildet, einen Naturkautschuk umfasst, und
wobei der Dien-basierte Kautschuk, der von der Kautschukzusammensetzung umfasst ist, die das mindestens eine äußere Oberflächenelement außer dem Laufstreifenteil bildet, einen Naturkautschuk umfasst.

7. Reifen nach Anspruch 6, wobei ein Gehalt des Naturkautschuks des Laufstreifenteils in 100 Massen-% der Kautschukkomponente geringer ist als ein Gehalt des Naturkautschuks des mindestens einen äußeren Oberflächenelements außer dem Laufstreifenteil in 100 Massen-% der Kautschukkomponente.

8. Reifen nach einem der Ansprüche 5 bis 7, wobei die Kautschukzusammensetzung, die das mindestens eine äußere Oberflächenelement außer dem Laufstreifenteil bildet, das Aromatenring-haltige Harz nicht umfasst, oder Massenteile des Aromatenring-haltigen Harzes, bezogen auf 100 Massenteile der Kautschukkomponente, welches Aromatenring-haltige Harz von der Kautschukzusammensetzung des mindestens einen äußeren Oberflächenelements außer dem Laufstreifenteil umfasst ist, geringer sind als Massenteile des Aromatenring-haltigen Harzes, bezogen auf 100 Massenteile der Kautschukkomponente, welches Aromatenring-haltige Harz von der Kautschukzusammensetzung umfasst ist, die den Laufstreifenteil bildet.

9. Reifen nach einem der Ansprüche 1 bis 8, wobei die Glasübergangstemperatur der Kautschukzusammensetzung des Laufstreifens höher als die Glasübergangstemperatur der Kautschukzusammensetzung des mindestens einen äußeren Oberflächenelements außer dem Laufstreifenteil ist.

10. Reifen nach einem der Ansprüche 1 bis 9, wobei, in einem Fall, dass das Mehrkomponentenpolymer, das von der Kautschukzusammensetzung umfasst ist, die den Laufstreifenteil bildet, ein hydriertes Polymer eines aus einer aromatischen Vinyleinheit und einer konjugierten Dien-Einheit bestehenden Polymers ist, der Hydrierungsanteil desselben 30 Mol-% oder mehr und weniger als 100 Mol-% beträgt, und, in einem Fall, dass das Mehrkomponentenpolymer, das von der Kautschukzusammensetzung umfasst ist, die das mindestens eine äußere Oberflächenelement außer dem Laufstreifenteil bildet, ein hydriertes Polymer eines aus einer aromatischen Vinyleinheit und einer konjugierten Dien-Einheit bestehenden Polymers ist, der Hydrierungsanteil desselben 30 Mol-% oder mehr und weniger als 100 Mol-% beträgt.

11. Reifen nach einem der Ansprüche 1 bis 10, wobei das mindestens eine äußere Oberflächenelement außer dem Laufstreifenteil mindestens ist, welches aus der Gruppe bestehend aus einem Schulterstreifen, einer Seitenwand und einem Wulstkernreiter ausgewählt ist.

12. Reifen nach einem der Ansprüche 1 bis 10, wobei das mindestens eine äußere Oberflächenelement außer dem Laufstreifenteil eine Seitenwand ist.

## Revendications

1. Pneumatique comprenant une partie bande de roulement, et au moins un élément de surface le plus vers l'extérieur autre que la partie bande de roulement,
dans lequel une composition de caoutchouc constituant la partie bande de roulement comprend un composant de caoutchouc comprenant un caoutchouc à base de diène et un polymère multi composant, le polymère multi composant comprenant une unité vinyle aromatique, une unité oléfine non conjuguée, et une unité diène conjuguée,
dans lequel une composition de caoutchouc constituant l'au moins un élément de surface le plus vers l'extérieur autre que la partie bande de roulement comprend un composant de caoutchouc comprenant un caoutchouc à base de diène et un polymère multi composant, le polymère multi composant comprenant une unité vinyle aromatique, une unité oléfine non conjuguée et une unité diène conjuguée, et
dans lequel, lorsque pour chacun des composants de caoutchouc individuel du composant de caoutchouc de la partie bande de roulement, une valeur obtenue en multipliant une fraction massique dans le composant de caoutchouc et la teneur en unité vinyle aromatique (% en masse) est calculée et ces valeurs sont sommées pour calculer une teneur en unité vinyle aromatique T_{Arm} (% en masse) dans le composant de caoutchouc de la partie bande de roulement, et, d'autre part, pour chacun des composants de caoutchouc individuels constituant le composant de caoutchouc de l'au moins un élément de surface le plus vers l'extérieur autre que la partie bande de roulement, une valeur obtenue en multipliant une fraction massique dans le composant de caoutchouc et la teneur en unité vinyle aromatique (% en masse) est calculée et ces valeurs sont sommées pour calculer une teneur en unité vinyle aromatique OMM_{Arm} (% en masse) dans le composant de caoutchouc de l'au moins un élément de surface le plus vers l'extérieur autre que la partie bande de roulement, T_{Arm} est supérieur à OMM_{Arm}.

2. Pneumatique selon la revendication 1,
dans lequel une teneur en polymère multi composant comprise dans la composition de caoutchouc constituant la partie bande de roulement est de 5 % en masse ou plus dans 100 % en masse de composant de caoutchouc ; et
dans lequel une teneur de polymère multi composant comprise dans la composition de caoutchouc constituant l'au moins un élément de surface le plus vers l'extérieur autre que la partie bande de roulement est de 2 % en masse ou plus dans 100 % en masse de composant de caoutchouc.

3. Pneumatique selon la revendication 1 ou la revendication 2, dans lequel T_{Arm} est égal à 15 % en masse ou plus.

4. Pneumatique selon l'une quelconque des revendications 1 à 3,
dans lequel la composition de caoutchouc constituant la bande de roulement comprend 40 parties en masse ou plus d'une charge sur la base de 100 parties en masse de composant de caoutchouc, et la charge comprend 50 % en masse ou plus de silice, et
dans lequel la composition de caoutchouc constituant l'au moins un élément de surface le plus vers l'extérieur autre que la partie bande de roulement comprend 10 parties en masse ou plus d'une charge sur la base de 100 parties en masse de composant de caoutchouc, et la charge comprend plus de 0 % en masse de silice.

5. Pneumatique selon l'une quelconque des revendications 1 à 4, dans lequel la composition de caoutchouc constituant la partie bande de roulement comprend 1 à 45 parties en masse d'une résine contenant un cycle aromatique sur la base de 100 parties en masse de composant de caoutchouc.

6. Pneumatique selon l'une quelconque des revendications 1 à 5,
dans lequel le caoutchouc à base de diène compris dans la composition de caoutchouc constituant la partie bande de roulement comprend un caoutchouc naturel, et
dans lequel le caoutchouc à base de diène compris dans la composition de caoutchouc constituant l'au moins un élément de surface le plus vers l'extérieur autre que la partie bande de roulement comprend un caoutchouc naturel.

7. Pneumatique selon la revendication 6, dans lequel une teneur de caoutchouc naturel de la partie bande de roulement dans 100 % en masse de composant de caoutchouc est inférieure à une teneur de caoutchouc naturel de l'au moins un élément de surface le plus vers l'extérieur autre que la partie bande de roulement dans 100 % en masse de composant de caoutchouc.

8. Pneumatique selon l'une quelconque des revendications 5 à 7, dans lequel la composition de caoutchouc constituant l'au moins un élément de surface le plus vers l'extérieur autre que la partie bande de roulement ne comprend pas la résine contenant un cycle aromatique, ou des parties en masse de la résine contenant un cycle aromatique sur la base de 100 parties en masse de composant de caoutchouc, laquelle résine contenant un cycle aromatique est comprise dans la composition de caoutchouc de l'au moins un élément de surface le plus vers l'extérieur autre que la partie bande de roulement, est inférieure à des parties en masse de résine contenant un cycle aromatique sur la base de 100 parties en masse de composant de caoutchouc, laquelle résine contenant un cycle aromatique est comprise dans la composition de caoutchouc constituant la partie bande de roulement.

9. Pneumatique selon l'une quelconque des revendications 1 à 8, dans lequel la température de transition vitreuse de la composition de caoutchouc de la bande de roulement est supérieure à la température de transition vitreuse de la composition de caoutchouc de l'au moins un élément de surface le plus vers l'extérieur autre que la partie bande de roulement.

10. Pneumatique selon l'une quelconque des revendications 1 à 9, dans lequel, dans le cas où le polymère multi-composant compris dans la composition de caoutchouc constituant la partie bande de roulement est un polymère hydrogéné d'un polymère constitué d'une unité vinyle aromatique et d'une unité diène conjuguée, son ratio d'hydrogénation est de 30 % molaire ou plus et inférieur à 100 % molaire, et dans le cas où le polymère multi composant compris dans la composition de caoutchouc constituant l'au moins un élément de surface le plus vers l'extérieur autre que la partie bande de roulement est un polymère hydrogéné d'un polymère constitué d'une unité vinyle aromatique et d'un unité diène conjuguée, son ratio d'hydrogénation est de 30 % molaire ou plus et inférieur à 100 % molaire.

11. Pneumatique selon l'une quelconque des revendications 1 à 10, dans lequel l'au moins un élément de surface le plus vers l'extérieur autre que la partie bande de roulement est au moins un élément choisi dans le groupe constitué d'une épaule, d'un flanc et d'un apex de clinchage.

12. Pneumatique selon l'une quelconque des revendications 1 à 10, dans lequel l'au moins un élément de surface le plus vers l'extérieur autre que la partie bande de roulement est un flanc.
